(19) **Europäisches Patentamt**

**European Patent Office**

**Office européen des brevets**

(11) **EP 0 757 811 B1**

(12) **EUROPÄISCHE PATENTSCHRIFT**

(45) Veröffentlichungstag und Bekanntmachung des Hinweises auf die Patenterteilung:
**14.11.2001 Patentblatt 2001/46**

(51) Int Cl.$^7$: **G06N 7/04**

(21) Anmeldenummer: **95915133.3**

(86) Internationale Anmeldenummer:
**PCT/DE95/00469**

(22) Anmeldetag: **06.04.1995**

(87) Internationale Veröffentlichungsnummer:
**WO 95/30185 (09.11.1995 Gazette 1995/48)**

(54) **VERFAHREN ZUR FUZZIFIZIERUNG VON AN EINGÄNGEN EINES FUZZY-PROZESSORS ANLIEGENDEN EINGANGSSIGNALEN UNTER VERWENDUNG VON EINGANGSZUGEHÖRIGKEITSFUNKTIONEN**

PROCESS FOR FUZZIFYING INPUT SIGNALS AT THE INPUT OF A FUZZY PROCESSOR USING INPUT-APPURTENANCE FUNCTIONS

PROCEDE DE MISE EN LOGIQUE FLOUE DE SIGNAUX D'ENTREE SE TROUVANT AUX ENTREES D'UN PROCESSEUR A LOGIQUE FLOUE, A L'AIDE DE FONCTIONS D'APPARTENANCE D'ENTREE

(84) Benannte Vertragsstaaten:
**AT DE FR IT**

(30) Priorität: **29.04.1994 DE 4415183**

(43) Veröffentlichungstag der Anmeldung:
**12.02.1997 Patentblatt 1997/07**

(73) Patentinhaber: **Infineon Technologies AG**
**81669 München (DE)**

(72) Erfinder: **KÜNEMUND, Thomas**
**D-80337 München (DE)**

(74) Vertreter: **Zedlitz, Peter, Dipl.-Inf. et al**
**Patentanwalt,**
**Postfach 22 13 17**
**80503 München (DE)**

(56) Entgegenhaltungen:
**EP-A- 0 513 689      EP-A- 0 574 714**
**DE-A- 3 936 503**

- **EICHFELD H ET AL 'ARCHITECTURE OF A CMOS FUZZY LOGIC CONTROLLER WITH OPTIMIZED MEMORY ORGANISATION AND OPERATOR DESIGN' 8.März 1992 , PROCEEDINGS OF THE INTERNATIONAL CONFERENCE ON FUZZY SYSTEMS, SAN DIEGO, MAR. 8 - 12, 1992, NR. CONF. 1, PAGE(S) 1317 - 1323 , INSTITUTE OF ELECTRICAL AND ELECTRONICS ENGINEERS siehe Kapitel 3, Absatz 1 - Absatz 4; Abbildungen 1, 2**

**Beschreibung**

Der Aufbau und die Arbeitsweise von Fuzzyprozessoren sind bekannt (siehe z.B. H.Eichfeld, T.Künemund, M. Klimke "An 8b Fuzzy Coprocessor for Fuzzy Control" ISSCC 93, San Franciso, 24. bis 26.2.1993, Seiten 180, 181, 286). Ein solcher Fuzzyprozessor enthält eine Fuzzyschaltung, auch Fuzzyfier genannt, deren Aufgabe darin besteht, für ein digitales Eingangssignal, das fuzzifiziert werden soll, mit Hilfe von in einem Speicher - auch Knowledge Base Memory (KBM) genannt-gespeicherten Eingangszugehörigkeitsfunktionen die Zugehörigkeitswerte zu ermitteln. Dazu muß zunächst festgestellt werden, welche Eingangszugehörigkeitsfunktionen (im folgenden Zugehörigkeitsfunktion genannt) vom Eingangssignal getroffen werden. Anschließend können dann die dem Eingangssignal zugeordneten Zugehörigkeitswerte aus dem Speicher geholt werden.

IEEE ICFS, März 1992, San Diego, page 1317 bis 1323, Eichfeld et al, offenbart ein Verfahren zur Fuzzifizierung von an Eingängen eines Fuzzyprozessors anliegenden digitalen Eingangssignalen unter Verwendung von Eingangszugehörigkeitsfunktionen, bei dem jede Zugehörigkeitsfunktion gespeichert wird, bei dem der Grundbereich des mit 5 Bits aufgelösten Eingangssignals jedes Eingangs in Elementarintervalle (000, 001, 010 usw...) eingeteilt wird, bei dem festgestellt wird, welche der im Elementarintervall vorhandenen Zugehörigkeitsfunktionen durch das Eingangssignal getroffen werden und bei dem der Zugehörigkeitswert des Eingangssignales für jede getroffene Zugehörigkeitsfunktion ermittelt wird.

Bisher war es üblich, die Zugehörigkeitsfunktionen punktweise abzuspeichern. Unter der Voraussetzung, daß das Eingangssignal mit 8 Bit aufgelöst ist, wurden die Zugehörigkeitsfunktionen punktweise mit 256 Punkten abgespeichert. Dies hat Vorteile. Die Berechnung der Zugehörigkeitswerte erfolgt durch einen Speicherzugriff (Abtastverfahren). Jede beliebige Form der Funktion ist erlaubt. Der Nachteil liegt aber darin, daß der benötigte Speicherplatz exponentiell von der Auflösung der Eingangssignale abhängt, so daß das Abtastverfahren bei z.B. einer Auflösung mit 12 Bit zu einem großen Speicherplatzbedarf führt.

DE3936503 Beschreibt eine Bekannte Möglichkeit der Abspeicherung der Zugehörogkeitsfunktionen, mit Hilfe einer jeweils die Form der Zugehörigkeirsfunktion enthaltenden Form in Formation.

Bei der Suche nach anderen Möglichkeiten der Abspeicherung der Zugehörigkeitsfunktionen, bei denen der Speicherbedarf geringer ausfällt, muß aber immer beachtet werden, daß der Rechenzeitaufwand zur Errechnung der Zugehörigkeitswerte nicht zu groß wird.

Das der Erfindung zugrunde liegende Problem besteht somit darin, ein Fuzzifizierungsverfahren anzugeben, bei dem der Speicherbedarf zur Speicherung der Zugehörigkeitsfunktionen nicht zu groß wird und trotzdem die Rechenzeit zur Errechnung der Zugehörigkeitswerte im vertretbaren Rahmen bleibt. Weiterhin besteht das Problem darin, eine Schaltungsanordnung zur Durchführung des Verfahrens anzugeben.

Das Problem wird durch ein Verfahren gemäß den Merkmalen des Patentanspruchs 1 gelöst. Eine Schaltungsanordnung zur Durchführung des Verfahrens ergibt sich aus den Merkmalen des Anspruchs 13.

Der Speicherplatzbedarf für die Abspeicherung der Zugehörigkeitswerte kann dadurch verringert werden, daß eine die Form der Zugehörigkeitsfunktion erfassende Forminformation abgespeichert wird. Diese Forminformation enthält Merkmale, die die Form der Zugehörigkeitsfunktion definieren, wie z.B. Stützstellen, an denen sich die Steigungen der Funktion ändern, und die Steigungen zwischen den Stützstellen.

Die Zugriffszeit zu der Forminformation von vom Eingangssignal getroffenen Zugehörigkeitsfunktionen kann dadurch verringert werden, daß der von der Auflösung abhängige Grundbereich der Eingangssignale in Elementarintervalle eingeteilt wird. Dann kann das Elementarintervall mit Hilfe der Most Significant Bits (MSB) des Eingangssignales ausgewählt werden. Dabei kann der Speicherbedarf weiterhin verringert werden, wenn die Elementarintervalle derart gewählt werden, daß innerhalb jeden Elementarintervalls höchstens vier Zugehörigkeitsfunktionen bzw. Teile von Zugehörigkeitsfunktionen liegen und/oder als Aufteilungsbedingung jeder innerhalb eines Elementarintervalls liegende Teil einer Zugehörigkeitsfunktion durch genau eine Stützstelle sowie Steigungen nach rechts und nach links von dieser Stützstelle aus beschrieben werden kann. Da aber auch Stützstellen an den Intervallgrenzen vorliegenden können, muß somit neben eventuell zwei Stützstellen an den Intervallgrenzen eine dritte Stützstelle innerhalb des Elementarintervalls zur eindeutigen Beschreibung der Zugehörigkeitsfunktion innerhalb dieses Elementarintervalls ausreichen. Die Zugehörigkeitsfunktionen können dabei Polygone beliebiger Form sein.

Die Unterteilung kann in jeweils gleich große Elementarintervalle erfolgen, wobei die Unterteilung so ist, daß es kein Elementarintervall gibt, das die Aufteilungsbedingung nicht erfüllt. Es ist jedoch zur Einsparung von Speicherplatz möglich, den Grundbereich nacheinander in verschieden große Elementarintervalle zu unterteilen, wobei nur die nach einer vorhergehenden Unterteilung gewonnenen Intervalle weiter unterteilt werden, die die Aufteilungsbedingung nicht erfüllen. Die Intervalle, die die Aufteilungsbedingung erfüllen, bleiben dagegen unverändert und bilden ein Elementarintervall.

Der Speicherplatzbedarf zur Speicherung der Forminformation der Zugehörigkeitsfunktionen kann weiterhin verringert werden, wenn die Forminformation folgendes enthält: Eine Nummer der Zugehörigkeitsfunktion, die Stützstellenwerte in x- und in y-Richtung und eine Steigungsinformation.

Die Steigungsinformation kann dabei aus zwei Teilen bestehen, bei der der erste Teil die Bitstelle der führenden '1' vor dem Komma des Absolutbetrages der Steigung angibt oder angibt, daß alle Stellen vor dem Komma '0' sind, bei der der zweite Teil aus dem auf die führende '1' vor dem Komma folgenden Bits gewonnen wird oder, falls es vor dem Komma keine führende '1' gibt, aus den Stellen nach dem Komma des Absolutbetrages gewonnen wird. Weiterhin ist es zweckmäßig, den unterschiedlichen Formen der Zugehörigkeitsfunktionen innerhalb eines Elementarintervalls eine Typennummer derart zuzuordnen, daß das Most Significant Bit der Typennummer angibt, ob innerhalb des Elementarintervalls der von der Stützstelle ausgehende Kurventeil der Zugehörigkeitsfunktion nur eine Steigung oder zwei unterschiedliche Steigungen aufweist und daß zwei weitere Bits die Vorzeichen der Steigungen angeben.

Diese Forminformation wird in einem Speicher, dem Knowledge Base Memory, hintereinander für jedes Elementarintervall und für jeden Eingang so abgespeichert, daß sie sehr schnell über drei Speicherworte adressierbar ist. In einem ersten Speicherwort steht dabei die Adresse eines zweiten Speicherwortes, in dem für jeden Eingang kodiert die Anzahl der Elementarintervalle gespeichert ist. Mit Hilfe dieser Angabe und der Most Significant Bits des Eingangssignales wird ein drittes Speicherwort adressiert, in dem die Startadresse eines Speichersektors mit den Zugehörigkeitsfunktionen enthalten ist, und zwar pro Eingang und pro Elementarintervall.

Andere Weiterbildungen der Erfindung ergeben sich aus den Unteransprüchen.

Anhand von Ausführungsbeispielen, die in den Figuren dargestellt sind, wird die Erfindung weiter erläutert. Es zeigen

Figur 1 ein Blockschaltbild eines Fuzzyprozessors,

Figur 2 die Darstellung des Grundbereiches eines Eingangssignals und dessen Aufteilung in Elementarintervalle,

Figur 3 eine Darstellung der Speicherorganisation des Knowledge Base Memory (KBM)

Figur 4 eine Schaltungsanordnung zur Adressengenerierung, die geeignet ist, die Speicher gemäß Figur 3 zu adressieren,

Figuren 5 und 6 Formen der Zugehörigkeitsfunktionen, deren Typennummern, deren Vorzeichen und die im KBM-Speicher abzuspeichernden Speicherworte,

Figur 7 ein Diagramm zur Erläuterung der Steigungsinformation,

Figur 8 eine Fuzzifier-Schaltung im Übersichtsbild,

Figur 9 eine Rechenschaltung der Fuzzifier-Schaltung,

Figur 10 die beim Betrieb der Fuzzifier-Schaltung erforderlichen Signale, erzeugt von einem Steuerwerk,

Figur 11 einen Zustandsgraph, der den die Fuzzifikation betreffenden Teil des Steuerwerkes beschreibt,

Figur 12 eine Schaltungsanordnung zur Bildung eines Absolutbetrages,

Figur 13 eine weitere Schaltungsanordnung zur Bildung eines Absolutbetrages,

Figur 14 und 15 Komponenten der Schaltungsanordnung nach Figur 13.

Figur 16 ein zweites Beispiel der Aufteilung des Grundbereiches in Elementarintervalle,

Figur 17 die Speicherorganisation des KBM für das Beispiel der Figur 16,

Figur 18 ein Algorithmus zum Adressieren der Zugehörigkeitsfunktionen für den Fall der Figur 17.

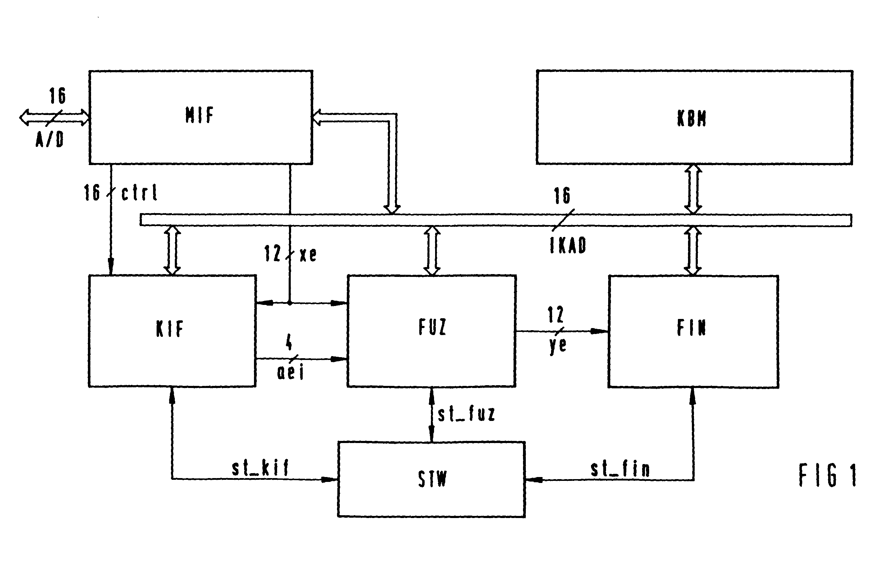

Figur 1 zeigt ein Blockschaltbild eines Fuzzyprozessors. Der Fuzzyprozessor enthält eine Fuzzifier-Schaltung FUZ, in der die Zugehörigkeitswerte ye für sog. scharfe Eingangssignale xe gebildet werden. Dazu arbeitet die Fuzzifier-Schaltung FUZ mit dem Speicher KBM zusammen, in dem die Zugehörigkeitsfunktionen abgespeichert sind. Der Zugehörigkeitswert ye wird weitergegeben an die Fuzzyinferenzschaltung FIN und dort auf bekannte Weise weiterverarbeitet. Weiterhin ist zum Betrieb der Fuzzifier-Schaltung FUZ ein Steuerwerk STW erforderlich, ein Microcontroller Interface MIF, das eine Verbindung zu einem Hostrechner herstellt, ein Knowledge Base Memory Interface KIF, das zum Betrieb des Knowledge Base Memories KBM notwendig ist. Die einzelnen Einheiten des Fuzzyprozessors, außer dem Steuerwerk, sind über einen gemeinsamen Bus IKAD miteinander verbunden.

Zur Fuzzifizierung von Eingangssignalen xe, die vom Hostrechner dem Microcontroller Interface MIF geliefert werden, wird die Fuzzifierschaltung FUZ verwendet, die feststellt, welche Zugehörigkeitsfunktionen, die im Speicher KBM gespeichert sind, von dem Eingangssignal xe getroffen sind und daraus die Zugehörigkeitswerte ye berechnet und diese an die Fuzzyinferenzschaltung FIN weitergibt. Im folgenden soll diese Fuzzifier-Schaltung und die Art und Weise, wie die Zugehörigkeitsfunktionen im Speicher KBM abgespeichert sind, geschildert werden, die weiteren Bestandteile des Fuzzyprozessors, wie MIF, KIF und STW werden nur insoweit in die Erläuterung einbezogen, als sie zum Verständnis des Betriebes der Fuzzifier-Schaltung FUZ erforderlich sind.

Bei der Darstellung der Erfindung wird davon ausgegangen, daß das digitale Eingangssignal xe mit ae = 12 Bit aufgelöst ist. Das gleiche gilt für die Zugehörigkeitswerte ye, die ebenfalls mit 12 Bit aufgelöst sind. Weiterhin soll bei der Darstellung davon ausgegangen werden, daß pro Eingang maximal 15 verschiedene Zugehörigkeitsfunktionen zugelassen sind und daß im Speicher 16 Bit breite Worte zur Verfügung stehen.

Selbstverständlich ist die Erfindung nicht auf dieses Ausführungsbeispiel mit diesen Randbedingungen begrenzt, diese Begrenzung ist nur gewählt worden, um die Erfindung klarer darstellen zu können.

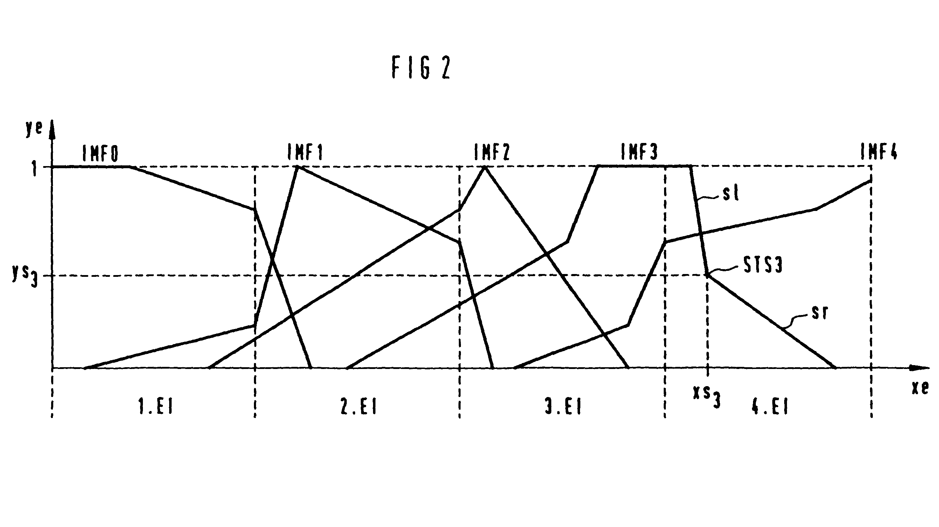

Figur 2 zeigt die Aufteilung des Grundbereiches für die mit ae Bit aufgelösten Eingangssignale. Figur 2 zeigt dabei die Zugehörigkeitsfunktionen IMF, aufgetragen über xe, und zwar jeweils die Zugehörigkeitswerte ye. Dabei ist der maximale Wert ye der Zugehörigkeitsfunktionen auf 1 normiert. Es ist gezeigt, wie der Grundbereich des Eingangssignals xe in vier Elementarintervalle EI aufgeteilt ist, wobei die Aufteilung derart ist, daß innerhalb jedes Elementarintervalls EI höchstens vier Zugehörigkeitsfunktionen liegen und jeder innerhalb eines Elementarintervalls liegende Teil einer Zugehörigkeitsfunktion genau durch eine Stützstelle STS sowie die Steigungen nach rechts und nach links von der Stützstelle STS beschreibbar ist. In Figur 2 ist eine Stützstelle angegeben, die mit xs3 und ys3 gekennzeichnet ist. Die einzelnen Zugehörigkeitsfunktionen sind durchnumeriert von IMF0 bis IMF4. Es wird darauf hingewiesen, daß neben dieser Stützstelle innerhalb eines Elementarintervalls weitere Stützstellen an der Intervallgrenze eines Elementarintervalls EI vorliegen können. Somit kann jede Zugehörigkeitsfunktion pro Elementarintervall mit höchstens drei Stützstellen eindeutig beschrieben werden. Von der Stützstelle STS3 gehen Kurventeile aus, die eine unterschiedliche Steigung haben. Dazu wird im folgenden die Steigung des Kurventeils links der Stützstelle STS3 mit sl, die Steigung des Kurventeils rechts der Stützstelle mit sr bezeichnet. An der Stützstelle selbst tritt eine Änderung dieser Steigung auf.

Die Aufteilung des Grundbereiches für das Eingangssignal xe, das ist der Wertebereich, der von dem Eingangssignale xe eingenommen werden kann, in Elementarintervalle EI erfolgt auf folgender Weise:

Von den ae bit des aufgelösten Eingangssignales xe werden aei Most Significant Bits zur Festlegung herangezogen. Dabei gilt für die flexible Anzahl der Elementarintervalle:

$$nei = 2^{aei}, 0 \leq aei \leq ae\text{-}1$$

wobei nei die Anzahl der Elementarintervalle pro Eingang darstellt. Die Zugehörigkeitswerte ye sind in Figur 2 auf 1 normiert, jedoch kann ye bei einer Auflösung mit 12 Bit Werte zwischen 0 und $2^{12\text{-}1}$ annehmen.

In einem zweiten Beispiel werden die Elementarintervalle folgendermaßen gewonnen:

Der Grundbereich der Zugehörigkeitsfunktionen eines Eingangssignales wird in einer ersten Stufe solange in gleichgroße Intervalle (deren Anzahl eine Potenz von 2 ist) unterteilt, bis mindestens eines dieser Intervalle die Aufteilungsbedingungen für ein Elementarintervall erfüllt (im Gegensatz dazu müssen in Figur 2 alle Intervalle diese Bedingung erfüllen). Für diese Elementarintervalle der Stufe I können dann die Adressen-Deskriptoren und Daten der Zugehörigkeitsfunktionen bestimmt und im Speicher KBM abgelegt werden.

Die zweite Stufe besteht nun darin, alle übrigen Intervalle der Stufe I -also diejenigen, die die Bedingungen für ein Elementarintervall nicht erfüllen, und nur diese- jeweils unabhängig voneinander weiter zu unterteilen, und zwar genauso wie in Stufe I. Mit anderen Worten wird in Stufe II jedes der übriggebliebenen Intervalle der Stufe I genauso behandelt wie der Grundbereich in Stufe I : für die Elementarintervalle der Stufe II werden dann die Adressen-Deskriptoren und Daten der Zugehörigkeitsfunktionen bestimmt, und alle übrigen Intervalle der Stufe II werden in Stufe III unabhängig voneinander weiter unterteilt wie oben beschrieben. Gleiches gilt für alle etwa noch notwendigen weiteren Stufen.

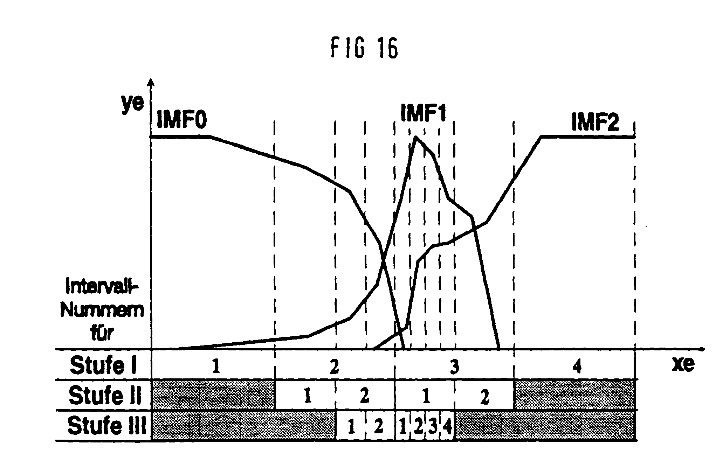

In Figur 16 ist ein Beispiel angegeben. Stufe I besteht in der Unterteilung des Grundbereiches von drei Zugehörigkeitsfunktionen IMFO, IMF1 und IMF2 in vier Intervalle, wobei das erste und das vierte Intervall die Bedingungen für ein Elementarintervall erfüllen.

Das zweite Intervall der Stufe I wird weiter in zwei Intervalle der Stufe II unterteilt, deren erstes ein Elementarintervall der Stufe II ist und deren zweites in zwei weitere Intervalle der Stufe III, die beide Elementarintervalle sind, unterteilt wird.

Das dritte Intervall von Stufe I wird in zwei Intervalle unterteilt, deren zweites ein Elementarintervall der Stufe II ist und deren erstes in vier weitere Intervalle der Stufe III, die alle Elementarintervalle sind, unterteilt wird.

Für dieses Beispiel ergeben sich also zwei Elementarintervalle der Stufe I, zwei der Stufe II und sechs der Stufe III. Die Daten für die Zugehörigkeitsfunktionen müssen also für 10 Elementarintervalle abgespeichert werden.

Gegenüber der Unterteilung des Grundbereiches in gleich große Elementarintervalle besteht der Vorteil dieses mehrstufigen Elementarintervall-Verfahrens darin, daß der Grundbereich nun nur noch dort feiner unterteilt werden muß, wo die Struktur, d.h. dicht beeinanderliegende Stützstellen der Zugehörigkeitsfunktionen, dies auch verlangt. Dadurch, daß Bereiche mit "wenig Struktur" nun gröber unterteilt werden können, ergibt sich -jedenfalls für Fälle, in denen die Struktur über den Grundbereich variiert -eine beträchtliche Einsparung an Speicherplatz. Der zusätzliche Aufwand an Rechenzeit läßt sich durch eine erweiterte Speicherorganisation begrenzen (siehe unten).

Die Zugehörigkeitsfunktionen IMF sind nun im Speicher KBM gespeichert. Für jedes Eingangssignal ist es somit erforderlich, die vom Eingangssignal xe getroffenen Zugehörigkeitsfunktionen IMF festzustellen und dann die Zugehörigkeitswerte zu berechnen. Dazu muß auf den Speicher KBM zugegriffen werden. Im folgenden wird die Speicherorganisation, die Ermittlung des getroffenen Elementarintervalls sowie des Speichersektors, in dem die Zugehörigkeitsfunktionen des getroffenen Elementarintervalls liegen, geschildert.

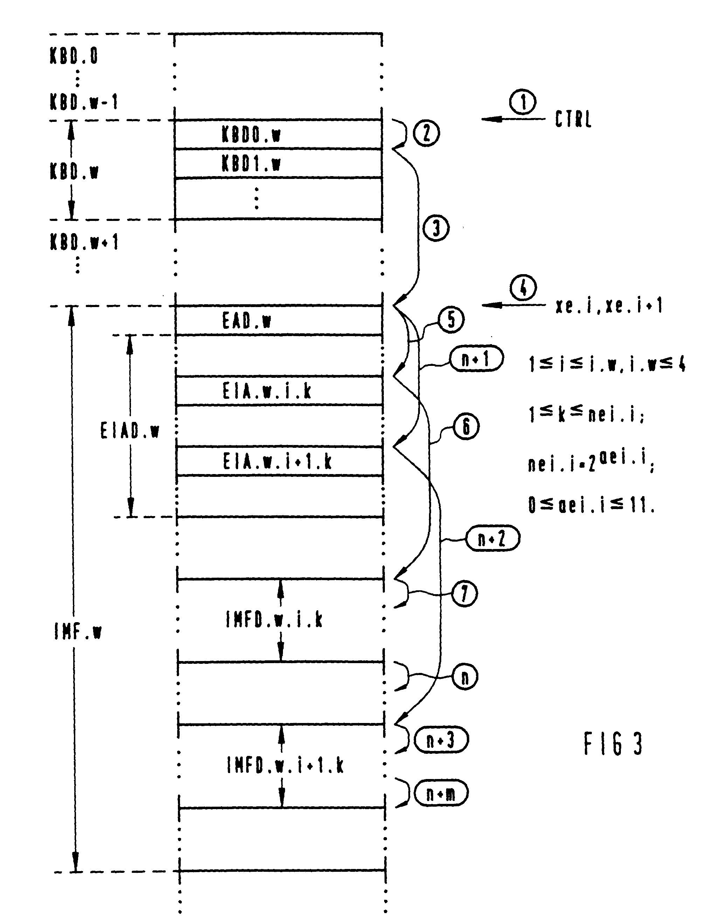

Es wird dabei davon ausgegangen, daß im Speicher KBM w Wissensbasen abgespeichert sind, daß i Eingänge und k Elementarintervalle EI vorliegen. Die jeweiligen Bereiche für i, k ergeben sich aus Figur 3.

Wie üblich werden zunächst die Adressendeskriptoren KBD0 und KBD1 aus dem KBM ausgelesen und in das Speicherinterface KIF geschrieben. Im Adressendeskriptor KBD1 steht eine Adresse des sog. Elementarintervall-Adressendiskriptors EAD. Über diese Adresse kann der Elementarintervall-Adressendiskriptor EAD angesteuert werden. Im Elementarintervall-Adressendiskriptor EAD ist mit jeweils z.B. vier Bit kodiert der Exponent aei gespeichert, aus dem die Anzahl der Elementarintervalle pro Eingang berechnet werden kann. Es gilt:

$$nei.i = 2^{aei.i}, \ 0 \leq aei.i \leq 11$$

Aus dem in EAD gespeicherten aei und den aei Most Significant Bits des Eingangssignales xe wird dann nach

$$adr(EIA) = adr(EAD) + \sum_{h=1}^{i-1} nei.h + rad(EIA) + "0000000000000001"$$

die Adresse eines Speicherwortes EIA ermittelt, in dem pro Eingang und pro Elementarintervall EI die Startadresse des Speichersektors angegeben ist, in dem die einem Elementarintervall zugeordneten Zugehörigkeitsfunktionen gespeichert sind. Dieser Speichersektor wird mit IMFD bezeichnet. rad(EIA) ist eine Relativadresse, die durch aei.i und die aei Most Significant Bits von xe.i festgelegt ist.

Aus Figur 3 ergibt sich diese Speicherorganisation mit den einzelnen Speicherbereichen sowie die Art und Weise, wie diese Speicherbereiche adressiert werden. Hier gibt es zunächst einen Speicherbereich für die Speicherworte KBD pro Wissensbasis, darauf folgt der Elementarintervall-Adressendiskriptor EAD pro Wissensbasis, anschließend die Speicherworte EIA, die jeweils die Startadresse des Speichersektors IMFD pro Elementarintervall und pro Eingang enthalten und schließlich die Speichersektoren IMFD für die Zugehörigkeitsfunktionen, in denen die Forminformation pro Zugehörigkeitsfunktion enthalten ist. Der Inhalt dieser Speichersektoren IMFD wird weiter unten erläutert.

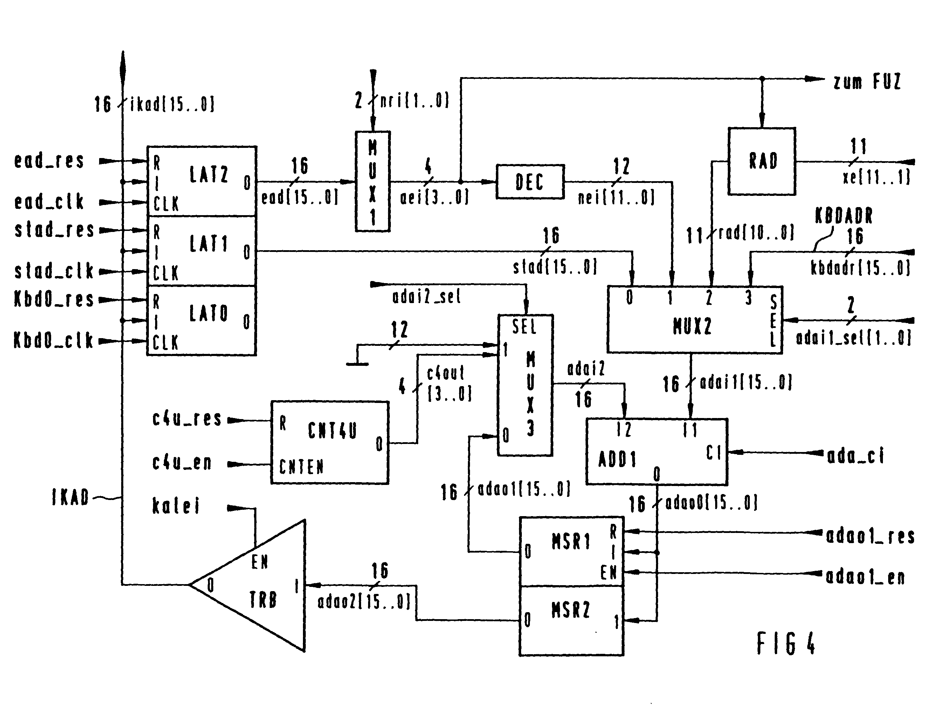

Eine Schaltungsanordnung, mit der eine Adressierung dieses Speicherbereiches möglich ist, zeigt die Figur 4. Diese Schaltung ist im KIF enthalten. Die angegebenen Steuersignale werden entweder direkt vom Steuerwerk geliefert oder ihre Erzeugung im KIF vom Steuerwerk veranlaßt. Der Ablauf der Adressengenerierung wird im folgenden schrittweise erläutert. Dabei sind in Figur 4 die Breite der einzelnen Signale angegeben:

1. Zuerst werden die im KIF, und zwar über ein Steuerregister CTRL, erzeugten und jeweils an dem Adressbus KBDADR anliegenden Adressen von KBD0 und KBD1 mit dem Steuersignal adai1_sel an einen Eingang I1 eines Addierers ADD1 geschaltet. Dessen zweiter Eingang I2 ist durch das Steuersignal adai2_sel mit einem Zähler CNT4U verbunden, der zu diesem Zeitpunkt rückgesetzt ist. Außerdem gilt ada_ci = '0' für den Carry-Eingang des Addierers ADD1. Damit gelangen die Werte des Adressbusses KBDADR unverändert über ein Masterslave-Register MSR2 und einen aktivierten Treiber TRB auf den Bus IKAD.

2. Der ausgelesene Wert von KBD0 wird in das mit kbd0_clk zum entsprechenden Zeitpunkt geöffnete Latch LAT0 geschrieben.

3. Dann wird der ausgelesene Wert von KBD1, gleich der Adresse von EAD, über das mit stad_clk rechtzeitig geöffnete Latch LAT1 und das mit adail_sel angesteuerte Schaltnetz MUX2 an den Eingang I1 des Addierers ADD1 gelegt; I2 liegt weiterhin auf Null und es gilt ada_ci = '0'. Damit gelangt die Adresse von EAD in das zu diesem Zeitpunkt mit adaol_en geöffnete Masterslave-Register MSR1 sowie über das Masterslave-Register MSR2 und den Treiber TRB im folgenden Takt auf den Bus IKAD.

4. Im folgenden Takt wird auch der Inhalt von EAD auf dem Bus IKAD gültig und mit ead_clk in das Latch LAT2 geschrieben. Ein Multiplexer MUX1 wählt daraus mit dem Signal nri den dem jeweiligen Eingang zugeordneten Wert von aei aus, womit sich einerseits über den Decoder DEC der Wert von nei ergibt und mit dem andererseits im Schaltnetz RAD aus aei und xe eine Relativadresse gebildet wird, die dazu verwendet wird, um das von den Most Significant Bits des Eingangssignales xe adressierte Elementarintervall und das diesem zugeordnete Speicherwort EIA im Speicher KBM zu ermitteln. Zur Bildung der Adresse von EIA legt der Multiplexer MUX2 mit dem Steuersignal adail_sel den um fünf führende Nullen ergänzten Wert der Relativadresse an den Eingang I1 und der Multiplexer MUX3 mit dem Steuersignal adai2_sel den im Register MSR1 gespeicherten Wert der Adresse von EAD an den Eingang I2 des Addierers ADD1. Außerdem gilt dann ada_ci = '1'. Der somit gebildete Wert der Adresse von EIA gelangt über das Register MSR2 und den Treiber TRB im folgenden Takt auf den Bus IKAD.

5. Der ausgelesene Wert von EIA, also die Adresse stad des ersten Wortes in IMFD, wird mit dem Steuersignal stad_clk in das Latch LAT1 geschrieben und mit dem Steuersignal adai_sel über den Multiplexer MUX2 an den Eingang I1 des Addierers ADD1 gelegt. Dessen zweiter Eingang I2 erhält mit dem Steuersignal adai2_sel den Wert '0' und es gilt ada_ci = '0'. Somit gelangt stad unverändert über das Register MSR2 und den Treiber TRB im folgenden Takt auf den Bus IKAD.

6. Die Adressen für die folgenden maximal sechzehn noch zu erfolgenden Zugriffe auf die Zugehörigkeitsfunktionen IMFD ergeben sich analog zu 5: Zum einen für die ersten fünfzehn Zugriffe als Summe des am Ausgang des Latch LAT1 liegenden stad und dem jeweils um 1 erhöhten Inhalt des Zählers CNT4U sowie ada_ci = '0', und schließlich, falls ein sechzehnter Zugriff erforderlich ist, aus der Summe von stad und dem letzten Zahlerstand sowie ada_ci = '1'.

7. Während der auf die Fuzzifikation einer Eingangsgröße folgenden Fuzzyinferenz, also der Auswertung der Fuzzyregeln, wird der im Register MSR1 gespeicherte Wert immer aktualisiert, d.h. der alte Wert

$$\mathrm{adr(EIA)} + \sum_{h=1}^{i-1} \mathrm{nei.h}$$

wird über MUX3 an den Eingang 12 von ADD1 gelegt und der jeweils um vier führende '0' ergänzte Wert von nei. i über MUX2 an den Eingang I1..

Beim zweiten Beispiel der Figur 16 läßt sich die Rechenzeit durch eine erweiterte Speicherorganisation im Sinne eines hierarchischen Systems von Elementarintervall-Adressen-Deskriptoren auf einen Speicherzugriff pro Stufe begrenzen, da die eigentliche Berechnung der Funktionswerte der Eingangszugehörigkeitsfunktionen nur für das vom scharfen Eingangssignal xe jeweils letztlich getroffene Elementarintervall durchgeführt wird.

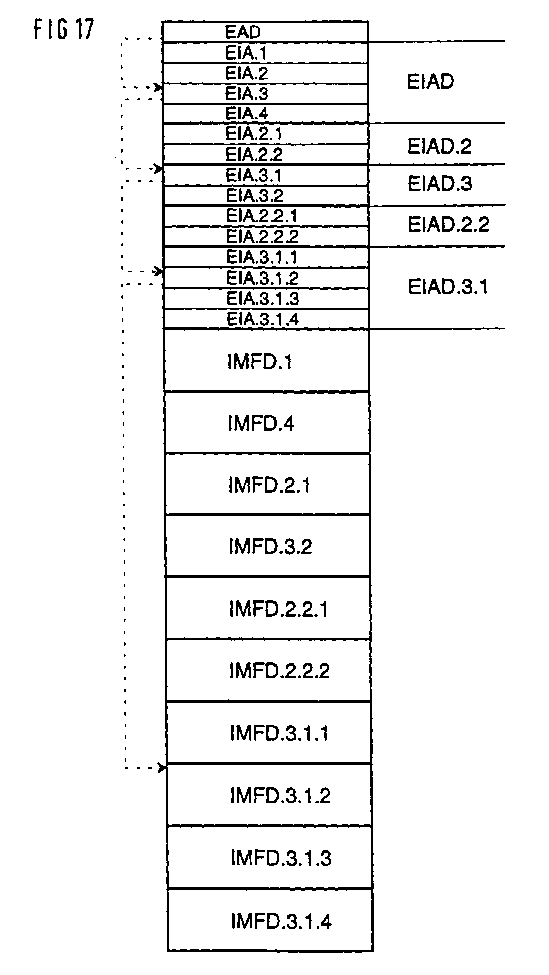

Ein Beispiel für das eben erwähnte hierarchische System von Elementarintervall-Adressen-Deskriptoren soll nun mit Figur 17 erläutert werden (siehe dazu auch Figur 3). Dazu werde angenommen, daß alle Speicherworte 16 Bit breit sind. Wie in Figur 3 enthält das Speicherwort EAD mit der Adresse adr (EAD) die Information aei über die Anzahl der Intervalle der Stufe I, in die der Grundbereich unterteilt wurde. Aus aei und dem scharfen Wert xe des Eingangssignales ergibt sich dann die Relativadresse r(aei, xe) für den Adressen-Deskriptor EIA.k des von xe getroffenen k-ten Intervalls der Stufe I. Für dessen absolute Adresse adr(EIA.k) gilt

$$\mathrm{adr(EIA.k)} = \mathrm{adr(EAD)} + \mathrm{r(aei,xe)}$$

Gegenüber Figur 3 erhalten die Speicherworte EIA.k = EIA.k [15:0] nun aber eine geänderte Bedeutung:

- für EIA.k[15] = 0 erfolgt keine weitere Unterteilung, d.h. das vorliegende k-te Intervall der Stufe I ist ein Elementarintervall, und die Bits EIA.k[14:0] bedeuten die Startadresse für den Speichersektor IMFD.k, in dem die eigentlichen Daten der Zugehörigkeitsfunktionen innerhalb dieses Elementarintervalls abgelegt sind.

- für EIA.k[15] = 1 jedoch bedeuten die Bits EIA.k[14:13] den binären Wert des Exponenten aei.k der Zahl **nei.k = $2^{aei,k+1}$** von für dieses Beispiel maximal 16 Intervallen, in die das k-te Intervall der Stufe I weiter unterteilt wird. Die Bits EIA.k[ 12:0] bilden nun eine Relativadresse für das erste Wort eines zusätzlichen (dem Elementarintervall-Adressen-Deskriptorblock EIAD der Stufe I entsprechenden) Blockes EIAD.k von Elementarintervall-Adressen-Deskriptoren der Stufe II bezüglich des k-ten Intervalls der Stufe I.

Welches 1-te Intervall der Stufe II durch den scharfen Wert xe des Eingangssignales getroffen wird, kann - analog zu dem in Figur 3 angegebenen Vorgehen - aus aei, aei.k sowie den aei+aei.k+1 MSB von xe bestimmt werden. Damit liegt dann auch die Relativadresse r(aei, aei.k, xe) für das Speicherwort EIA.k.l innerhalb von EIAD.k fest.

Die Speicherworte EIA.k.l sowie alle weiteren Hierarchiestufen sind genauso definiert wie EIA.k.

In Figur 17 ist diese Speicherorganisation für das Beispiel von Figur 16 angegeben. Die Abfolge der Speicherzugriffe ist mit den gestrichelten Linien angedeutet, wobei ein scharfer Wert xe des Eingangssignales innerhalb des zweiten Elementarintervalls der Stufe III angenommen wurde. Da dieses Elementarintervall in dem zum dritten Intervall der Stufe I gehörenden ersten Intervall der Stufe II liegt, folgen nach dem Speicherzugriff auf EAD also zunächst der auf EIA.3 und dann die auf EIA.3.1 sowie EIA.3.1.2, dessen 15 LSB EIA.3.1.2[14:0 ] die Startadresse von IMFD.3.1.2 bedeuten.

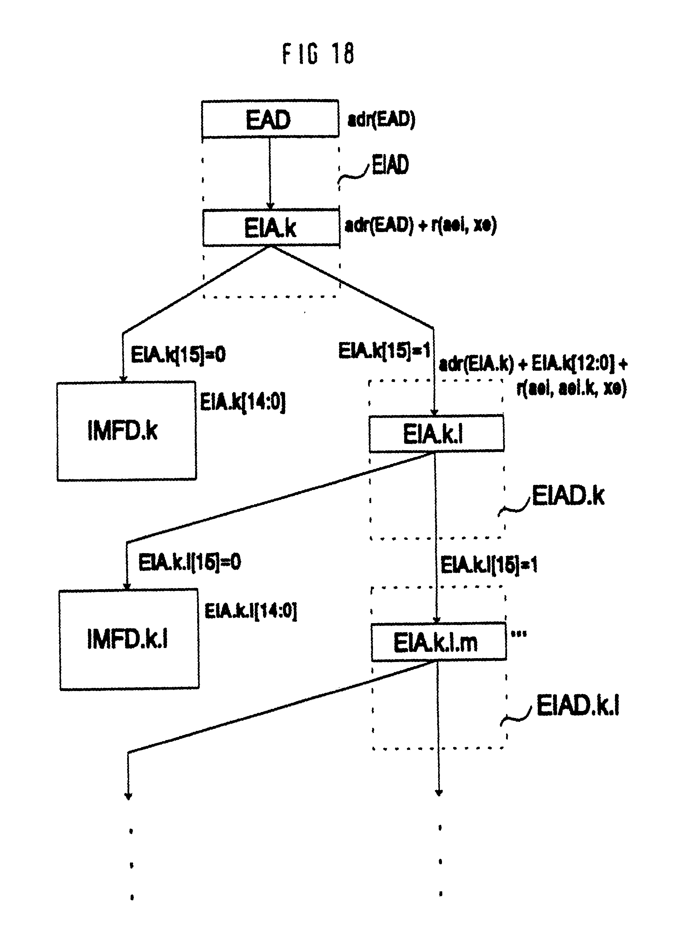

Der bei der Adressierung verwendete Algorithmus kann auch Figur 18 entnommen werden. Zur schaltungstechnischen Realisierung der Adressengenerierung für das mehrstufige Verfahren ist die in Figur 4 angegebene Anordnung für das einstufige Verfahren zu erweitern.

Zur Fuzzifikation der weiteren Eingangsgrößen müssen nur die Schritte 4) - 6) und ggf. 7) durchlaufen werden.

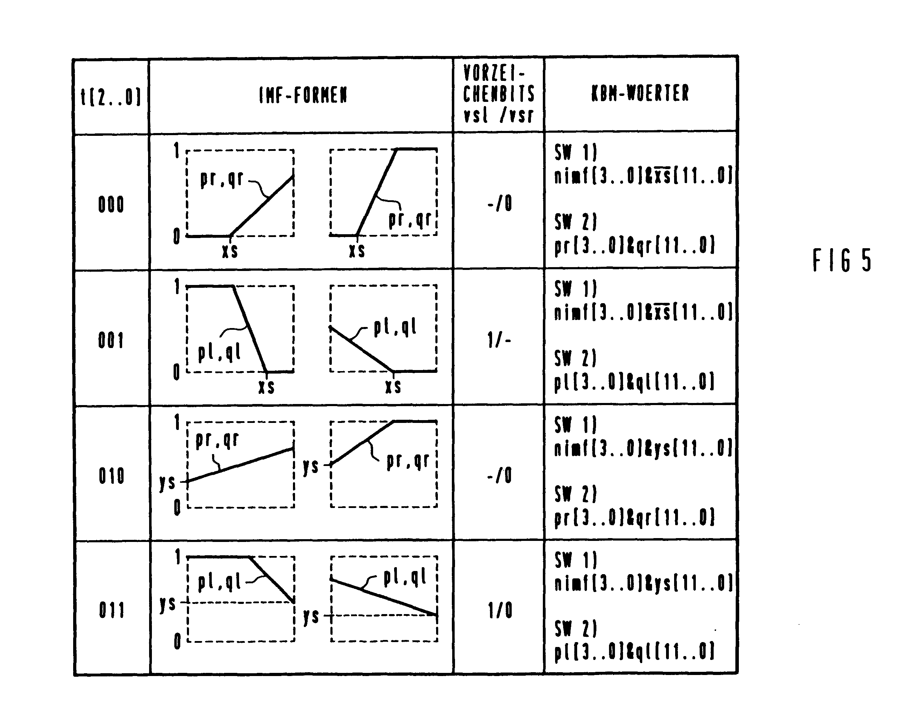

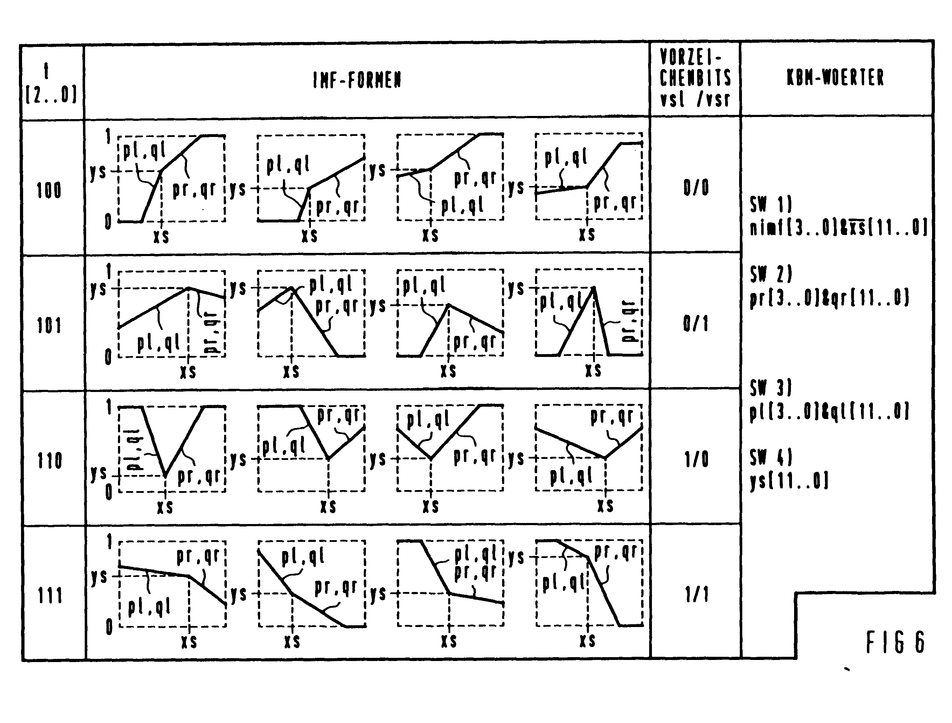

Im Speichersektor IMFD stehen die Daten für die Zugehörigkeitsfunktionen der einzelnen Elementarintervalle EI pro Eingang für die einzelnen Wissensbasen. Dabei enthält das erste Speicherwort von IMFD die mit zwei Bit kodierte Anzahl ZIMF der Zugehörigkeitsfunktionen innerhalb eines Elementarintervalls sowie mit jeweils drei Bit kodierte sog. Typennummern t für die maximal vier Zugehörigkeitsfunktionen IMF im Elementarintervall EI. Die den Typennummern zugeordneten IMF-Formen sind in den Figuren 5 und 6 dargestellt. Mit Hilfe dieser Informationen können dann die Zugehörigkeitswerte ye für jedes xe berechnet werden.

Figur 5 und 6 zeigen die einzelnen Formen der Zugehörigkeitsfunktionen, ihre Typennummern und die im Speichersektor IMFD abzuspeichernden Speicherworte zur Beschreibung der IMF-Formen. Es ist jeweils die Kurvenform innerhalb eines Elementarintervalles gezeigt. Die Typennummern sind so gewählt, daß in ihnen bereits die Vorzeichen der Steigung s enthalten sind, während das Most Significant Bit von t angibt, ob von der Stützstelle STS jeweils zwei Kurventeile mit unterschiedlicher Steigung ausgehen, die zu speichern sind. Mit einer solchen Wahl der Typennummern wird der Speicherplatzbedarf verringert, da bereits in der Typennummer Information enthalten ist, die später bei der Berechnung des Zugehörigkeitswertes verwendet werden kann.

In Figur 5 sind die IMF-Formen dargestellt, bei denen das Most Significant Bit '0' ist. Es ist zu sehen, daß die Stützstellen STS jeweils entweder durch ein xs oder durch ein ys festgelegt ist. Der andere Wert ist entweder '0' bei ys oder wird durch die Grenzen des Elementarintervalls festgelegt, die ja mit den Most Significant Bits des Eingangssignales xe erkannt werden können. Wie ein Vergleich der Spalte für die Vorzeichenbits mit den Stellen 0 und 1 der Typennummer t zeigt, enthalten die Stellen 0 und 1 der Typennummer t die Vorzeichenbits. Die IMF-Formen werden bei den Typennummern, bei denen das Most Significant Bit '0' ist, mit Hilfe von zwei Speicherwörtern SW gespeichert. Im ersten Speicherwort SW1 steht die Nummer nimf der Zugehörigkeitsfunktion und der Wert der Stützstelle, also $\overline{xs}$ oder ys, im zweiten Speicherwort SW2 steht eine datenkomprimierte Steigungsinformation DKS, bestehend aus zwei Teilen p und q, die unten erläutert wird.Bei den IMF-Formen nach Figur 5 werden also nur zwei Speicherwörter zur Speicherung der IMF-Daten pro Elementarintervall benötigt, da die weiteren Werte für ys oder xs bzw. p oder q durch die Kurvenform festgelegt sind.

Anders ist die Lage bei den Kurvenformen der Figur 6. Hier ist das Most Significant Bit der Typennummer eine '1'. Es sind vier Speicherworte SW erforderlich, um die IMF-Form zu speichern. Das erste Speicherwort SW1 enthält die Nummer nimf der Zugehörigkeitsfunktion und den Wert xs der Stützstelle in bitweise invertierter Form $\overline{xs}$, das zweite Speicherwort SW2 enthält die Werte für pr und qr, das dritte Speicherwort SW3 die Werte für pl und ql und das vierte Speicherwort SW4 den Wert für ys der Stützstelle. Hier sind die Kurvenformen so, daß die Stützstelle innerhalb des Elementarintervalls EI liegt, und somit einen zu speichernden Wert xs und ys aufweist. Damit gehen auch von dieser Stützstelle STS auf beiden Seiten Kurven aus, deren Steigungsinformation DKS gespeichert sein müssen, um aus diesen Daten den Zugehörigkeitswert berechnen zu können. Dabei werden die Vorzeichenbits, die in der Spalte der Vorzeichenbits der Figur 5 und 6 gezeigt sind, natürlich nicht mit abgespeichert, da sie in der Typennummer t enthalten sind. Die hinter den einzelnen Werten angegebenen Zahlen geben die Bitstellen des jeweiligen Wertes an, wobei davon ausgegangen wird, daß die Werte für die Stützstelle mit zwölf Bit aufgelöst sind und ein Speicherwort 16 Bit hat.

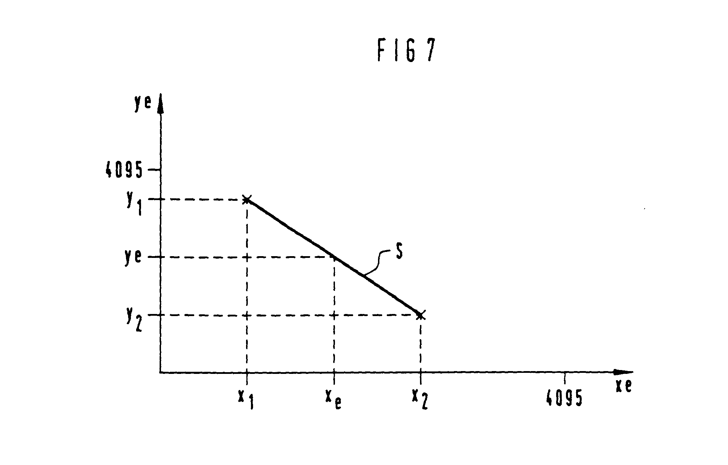

Die datendatenkomprimierte Steigungsinformation wird folgendermaßen gebildet (Figur 7):

Ausgangspunkt ist der Absolutwert sa der Steigung s zwischen den benachbarten Stützstellen $(x_1, y_1)$ und $x_2, y_2)$:

$$sa = |s| = \left| \frac{y_2 - y_1}{x_2 - x_1} \right|$$

Da die x- und y-Werte mit 12 Bit aufgelöst sind, ergibt sich für sa eine positive Binärzahl mit 12 Stellen vor dem Komma und beliebig vielen Stellen nach dem Komma. Zur Fuzzifizierung (d.h. zur Berechnung des der scharfen 12 Bit Eingangsgröße xe entsprechenden 12 Bit Zugehörigkeitswertes ye) genügt es aber, statt sa eine datenkomprimierte Steigungsinformation (DKS) zu speichern, deren Zustandekommen anhand eines Beispiels verdeutlicht werden soll: Es sei

| 11 | 10 | 9 | 8 | 7 | 6 | 5 | 4 | 3 | 2 | 1 | 0 | -1 | -2 | -3 | -4 | -5 | -6 | -7 | -8 | -9 | -10 | -11 | -12 | -13 |
|----|----|---|---|---|---|---|---|---|---|---|---|----|----|----|----|----|----|----|----|----|-----|-----|-----|-----|
| sa= | 0 | 0 | 0 | 0 | 0 | 0 | 0 | 1 | 0 | 0 | 0 | 1 | ,1 | 0 | 1 | 0 | 1 | 0 | 1 | 0 | 1 | 0 | 1 | 0 | 1 |

Dabei gibt die obere Zeile die Bitstelle, die untere Zeile die zugeordneten Werte an.

In einem ersten Schritt wird nun geprüft, ob mindestens eine der Bitstellen vor dem Komma den Wert 1 aufweist. Falls dies, wie in dem angegebenen Beispiel, der Fall ist, wird als erster Teil der DKS die Bitstelle p der führenden 1 vor dem Komma von sa binär kodiert; wegen $0_{dezimal} \leq p \leq 11_{dezimal}$ genügen dazu 4 Bit. Für das angegebene Beispiel ergibt sich

$$p = 4_{dezimal} = 0100$$

Der zweite Teil q der DKS besteht aus weiteren 12 Bit, die durch Runden der auf die führende 1 vor dem Komma von sa unmittelbar folgenden Bitstellen auf 12 Bit Genauigkeit gewonnen werden; für das angegebene Beispiel sind dazu die Bitstellen 3, 2, ..., -9 mit den Werten

```
                              0001101010101,
        auf den Wert     q =  000110101011
        zu runden.
```

Damit sind insgesamt 16 Bit (p(3), ..., p(0), q(11), ..., q(0)) zur Kodierung des Absolutbetrages sa einer Steigung erforderlich, falls eine der Bitstellen vor dem Komma von sa den Wert 1 aufweist, also für sa ≥ 1.

Der Fall sa < 1, d.h. alle Bitstellen vor dem Komma von sa haben den Wert 0, wird folgendermaßen codiert:

Für den ersten Teil p der DKS wird eine der noch "freien" Bitkombinationen

$$p(3) = p(2) = 1, p(1), p(0)$$

beliebig für p gewählt, während sich der zweite Teil q der DKS durch Runden der Bitstellen nach dem Komma von sa auf 12

Bit Genauigkeit gewonnen werden. Werden in dem oben angegebenen Beispiel alle Stellen vor dem Komma gleich Null gesetzt, so gilt zunächst

```
        sa =  0   0  ..   0, 1  0  1  0  1  0  1  0  1  0  1  0  1
```

und damit

$$q = \quad 1 \quad 0 \quad 1 \quad 0 \quad 1 \quad 0 \quad 1 \quad 0 \quad 1 \quad 0 \quad 1 \quad 1$$

Auch im Fall sa < 1 werden also insgesamt 16 Bit zur Kodierung von sa verwendet.

Aus p und q ergibt sich dann der Absolutwert sa der Steigung nach:

$$sa = \delta \cdot 2^p + 2^{\delta \cdot p - 12} \cdot \sum_{\sigma-11}^{0} s(\sigma + \delta \cdot p - 12) \cdot 2^\sigma, \text{mit} \, \delta = 1 - p(3) \cdot p(2)$$

Aus den in Figur 5 und 6 angegebenen IMF-Formen muß nun für die Eingangssignale xe der entsprechende Zugehörigkeitswert ye berechnet werden. Dazu ist es zweckmäßig, folgende Definitionen zu geben:

Mit vdx wird das Vorzeichenbit von dx angegeben. dx ist die Differenz von xe - xs, also die Differenz zwischen dem Eingangssignal xe und dem x-Wert der Stützstelle innerhalb des Elementarintervalls, das von dem Eingangssignal xe getroffen worden ist. Diese Differenz kann $\geq$ 0 oder < 0 sein, je nach dem, ob xe rechts oder links von dem x-Wert der Stützstelle liegt. Also gilt:

$$vdx = 0 \text{ für xe-xs} \geq 0$$

$$vdx = 1 \text{ für xe-xs} < 0$$

Der Absolutbetrag der Differenz xe-xs wird mit dxa bezeichnet. Es gilt:

$$dxa = |xe-xs|$$

Das Vorzeichenbit für den Wert dy wird mit vdy bezeichnet. dy ist dabei das Produkt aus Steigung und xe-xs und entspricht ye-ys. vdy ergibt sich dann aus vdx sowie den in den Typennummern t implizit enthaltenen Vorzeichenbits vsr, vsl der Steigungen nach rechts bzw. nach links von der Stützstelle aus. Es kann der folgenden Tabelle entnommen werden:

Tabelle 1:

| | | |
|---|---|---|
| vdy = '0' | für | t(2) = '0' |
| vdy = vdx | für | t = "100" |
| vdy = '1' | für | t = "101" |
| vdy = '0' | für | t = "110" |
| vdy = $\overline{vdx}$ | für | t = "111" |

Mit diesen Definitionen ergibt sich für den Zugehörigkeitswert ye die folgende Formel:

$$ye = ys \oplus (-1)^{vdy} \cdot (sa \otimes dxa)$$

ys ist dabei der y-Wert der Stützstelle STS, vdy das Vorzeichen von dy, sa der Absolutbetrag der Steigung und dxa der Absolutbetrag der Differenz dx.

Es muß beachtet werden, daß die Werte, die ye einnehmen kann, also auch das Produkt von sa mit dxa und die Summe von ys mit diesem Produkt durch die Auflösung des Zugehörigkeitswertes ye begrenzt wird. Somit hat ye die Grenzen 0 und, unter der Voraussetzung, daß das Signal ye mit m Bit aufgelöst ist, die zweite Grenze $2^{m-1}$. Wenn sich bei der Berechnung ergibt, daß entweder ye = 0 sein muß oder die untere Grenze 0 unterschreitet oder die obere Grenze $2^{m-1}$ überschreitet, ist die genaue Berechnung entsprechend der angegebenen Formel nicht mehr erforderlich. Diese Begrenzung wird beim Produkt mit $\otimes$ und bei der Summe mit $\oplus$ in der Formel für ye angegeben.

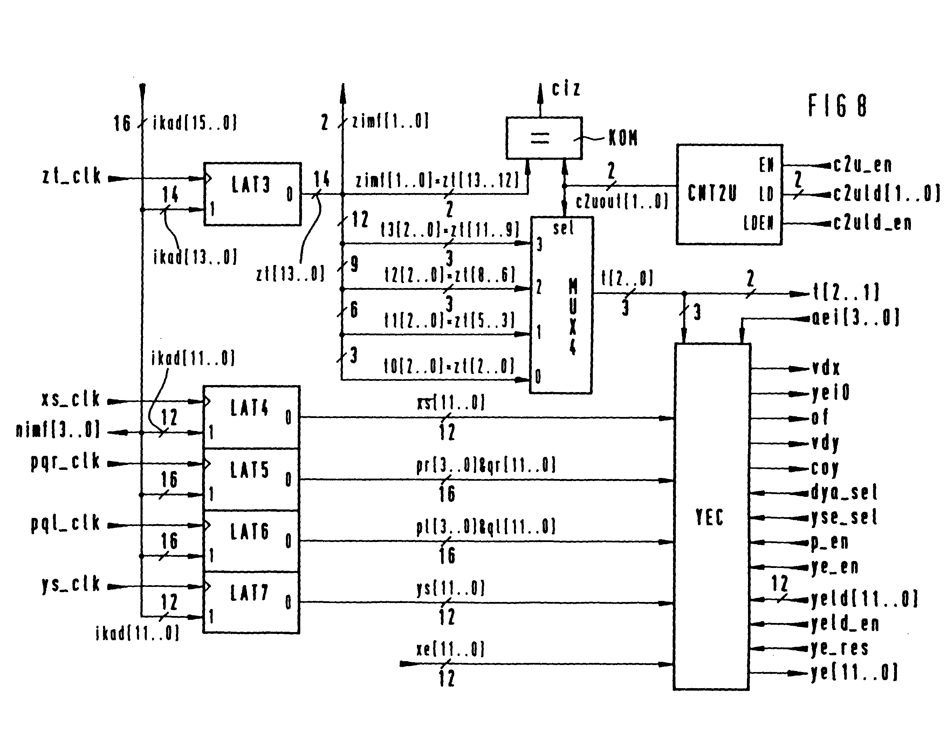

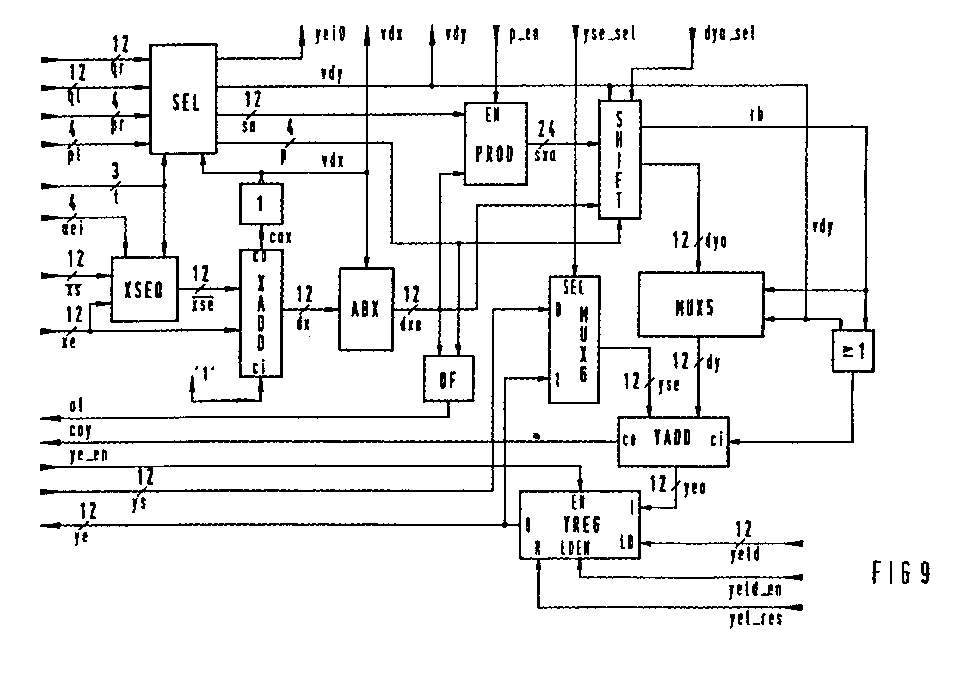

Eine Fuzzifier-Schaltung FUZ, mit der ye berechnet werden kann, ergibt sich aus Figur 8 und Figur 9. Figur 8 zeigt dabei die Schaltung, bei der die Rechenschaltung YEC nur als Block dargestellt ist, Figur 9 die Ausführung der Rechenschaltung YEC.

Die Berechnung von ye kann erfolgen, sobald die Daten der getroffenen Zugehörigkeitsfunktionen aus dem Speicher KBM ausgelesen worden sind, und in Latchspeicher LAT3 bis LAT7 eingeschrieben worden sind. In den Latchspeicher LAT3 wird dabei das erste Speicherwort SW0 des dem Elementarintervall zugeordneten Speichersektors eingeschrieben, in dem die Anzahl der getroffenen Zugehörigkeitsfunktionen und deren Typennummern enthalten sind. In den Latchspeicher LAT4 werden die 12 niedrigstwertigsten Bits des Speicherwortes SW1 eingeschrieben, in dem die Nummer der Zugehörigkeitsfunktion und der bitweise invertierte xs-Wert enthalten sind, in den Latchspeicher LAT5 pr und qr, in den Latchspeicher LAT6 pl und ql und in den Latchspeicher LAT7 ys. pr und qr, pl und ql und ys sind jeweils eigene Speicherworte SW , die im Speicher KBM gespeichert sind.

Über einen Multiplexer MUX4 werden nun nacheinander die im ersten Speicherwort SW0 enthaltenen Typennummern t herausgefiltert und der Rechenschaltung YEC zugeführt. Zur Ansteuerung des Multiplexers MUX4 ist dabei ein Zähler CNT2U vorgesehen, der hochgezählt wird bis zu einem Wert, der der Zahl zimf entspricht, die die Anzahl der Zugehörigkeitsfunktionen für das getroffene Elementarintervall angibt. Diese Anzahl zimf ist ebenfalls im ersten Speicherwort SW0 enthalten. Aus den Typennummern t, den Werten in den weiteren Speicherworten, die von den Latchspeichern LAT4 bis LAT6 der Rechenschaltung YEC zugeführt werden und aus dem Eingangssignal xe, das ebenfalls an der Rechenschaltung YEC anliegt, kann dann diese den Zugehörigkeitswert ye entsprechend der oben angegebenen Formel berechnen. Wenn für das getroffene Elementarintervall EI alle Zugehörigkeitsfunktionen bzw. deren Typennummern t abgearbeitet sind, dann gibt eine Komparatorschaltung KOM, die die Anzahl zimf mit dem Zählerstand von CNT2U vergleicht, ein Signal ciz ab, das dem Steuerwerk STW zugeführt wird und dieses veranlaßt, die Berechnung der Zugehörigkeitswerte zu beenden. Die Typennummer t, und zwar deren Stellen 1 und 2, wird ebenfalls dem Steuerwerk zugeführt, da diese für den Ablauf der Berechnung von ye von Bedeutung sind. Der Wert von nimf geht zur Inferenzeinheit FIN und wird dort zur Auswertung von ye mit herangezogen.

Die genauere Ausführung der Rechenschaltung kann Figur 9 entnommen werden. Mit Hilfe des Schaltnetzes XSEQ und der Addiererschaltung XADD wird die Differenz dx berechnet. Dabei wird zur Vereinfachung der Berechnung dx folgendermaßen umformuliert:

$$dx = xe\text{-}xs = xe + \overline{xse} + 1 \cdot 2^0$$

wobei $\text{-}xs = \overline{xse} + 1 \cdot 2^0$ ist und $\overline{xse}$ das Einerkomplement von xs. Dies entspricht einer Zweierkomplementschreibweise für -xs.

Dementsprechend wird dem Schaltnetz XSEQ, $\overline{xs}$ , xe, aei und t zugeführt und es bildet $\overline{xse}$ . aei und t werden dem Schaltnetz XSEQ zugeführt, um $\overline{xse}$ berechnen zu können, wenn in den Speicherworten der Wert von xs nicht gespeichert werden muß, wenn also, wie es z.B. bei Figur 5 teilweise der Fall ist, die x-Koordinate xs der Stützstelle mit einer der Intervallgrenzen zusammenfällt.

Der Addierer XADD ist als Subtrahierer geschaltet (CI = '1') und bildet aus $\overline{xse}$ und xe den Wert dx. Weiterhin erzeugt er das Vorzeichenbit vdx, das sich aus dem invertierten Übertragsignal cox ergibt. Dabei ist cox = '1' für xe-xs $\geq$ 0 cox = '0' für xe-xs < 0.

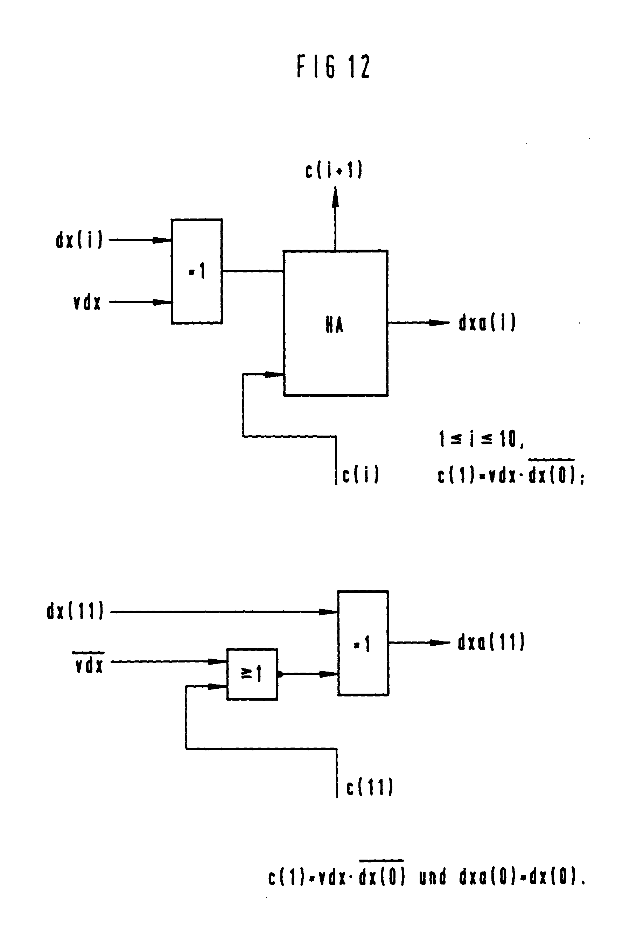

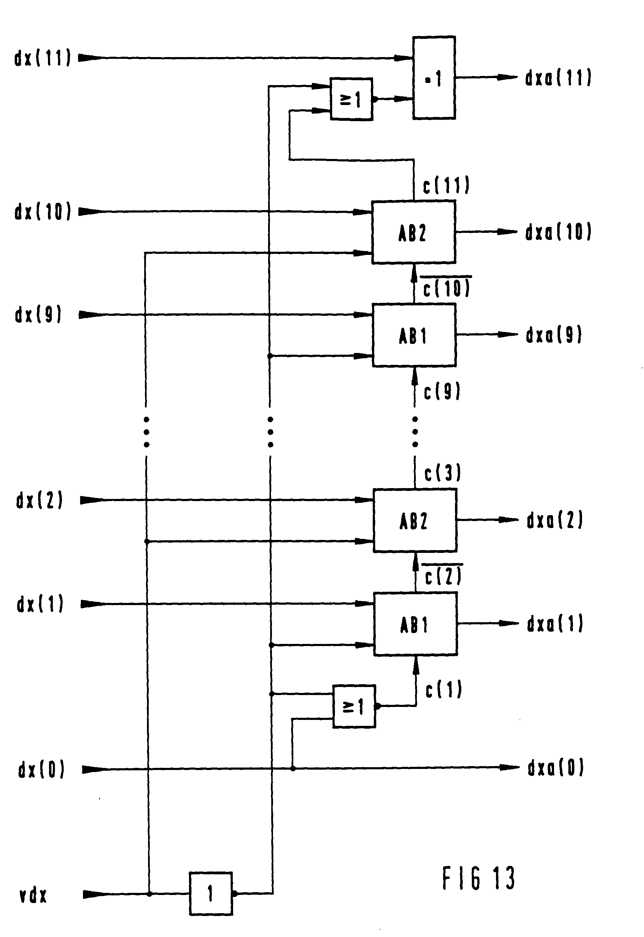

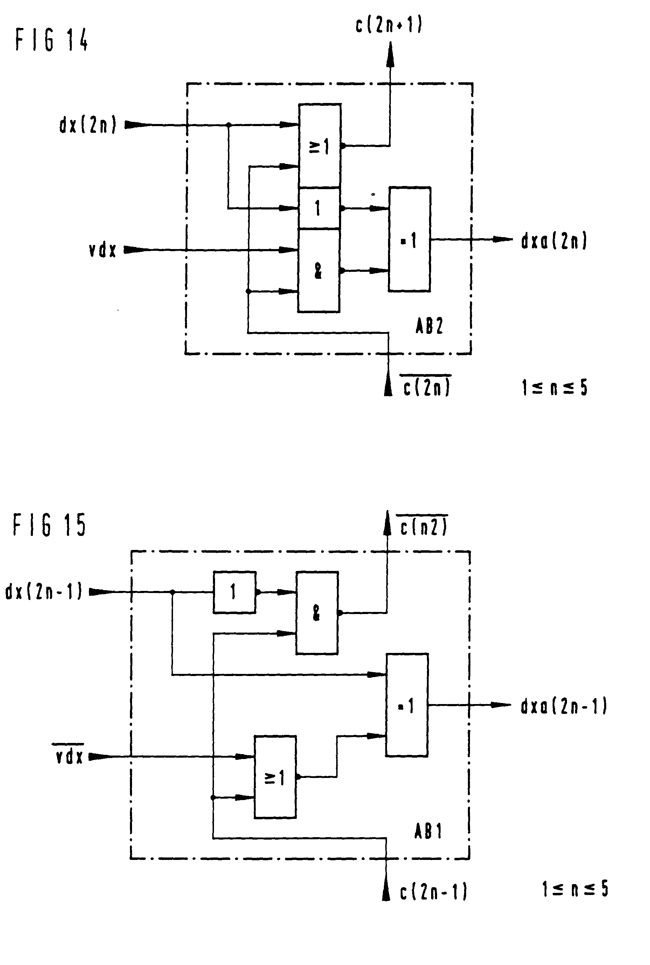

Das Schaltnetz ABX bildet nun aus dx den Absolutbetrag von dx. Eine Schaltung, mit der dies durchgeführt werden kann, zeigt Figur 12, bei der das Schaltnetz ABX mit Hilfe von Halbaddierern HA realisiert wird bzw. die Figuren 13 bis 15. Die Funktion dieser Schaltungen kann den Figuren entnommen werden.

Das Ausgangssignal dxa von ABX wird an einen von zwei Eingängen eines Multiplizierers PROD angelegt. An dessen zweitem Eingang liegen die 12 Least Significant Bits von sa, des jeweiligen Absolutbetrages der Steigung s an, das vom Schaltnetz SEL geliefert wird. Es wird aus qr oder ql ausgewählt. Das Schaltnetz SEL wählt weiterhin p aus pr oder pl aus, erzeugt das Vorzeichen von y, vdy, unter Verwendung der Typennummer t und von vdx entsprechend der Tabelle 1. Es erzeugt weiterhin ein Signal yei0, das angibt, ob der Zugehörigkeitswert bereits bekannt ist, was z.B. aus dem Wert von xe und der Typennummer t entnehmbar ist. Z.B. gilt für t = "000" und xe < xs oder t = "001" und xe > xs, daß ye = 0 ist. Dann ist nämlich eine Berechnung des Zugehörigkeitswertes nicht erforderlich, d.h. die Fuzzifier-Schaltung kann mit der Berechnung des Zugehörigkeitswertes für die nächste Zugehörigkeitsfunktion beginnen bzw. die Inferenzeinheit kann, wenn alle Zugehörigkeitsfunktionen pro Elementarintervall bearbeitet sind, mit seiner Arbeit beginnen.

Das Schaltnetz SHIFT erfüllt zwei Aufgaben: Zum einen wird mit Hilfe eines Steuersignales dya_sel = '1' die Multiplikation von dxa mit $2^p$ durchgeführt und zum anderen wird für dya_sel = '0' das Ergebnis sxa des Multiplizierers PROD unter Verwendung von p an die richtige Stelle geschoben. Die Berechnung von dxa$\cdot 2^p$ kann sehr schnell durchgeführt werden. Die Arbeitsweise von SHIFT in Abhängigkeit des Steuersignals dya_sel zeigen Tabellen 2 und 3.

**Tabelle 2:**

| p | dya[11..0] |
|---|---|
| 0 | $\overline{dya\_sel} \cdot sxa[23..12] + dya\_sel \cdot dxa[11..0]$ |
| 1 | $\overline{dya\_sel} \cdot sxa[22..11] + dya\_sel \cdot \{dxa[10..0]\&{}^{\bullet}0^{\bullet}\}$ |
| 2 | $\overline{dya\_sel} \cdot sxa[21..10] + dya\_sel \cdot \{dxa[9..0]\&{}^{\bullet}00^{\bullet}\}$ |
| $\vdots$ | $\vdots \qquad\qquad \vdots$ |
| 11 | $\overline{dya\_sel} \cdot sxa[12..1] + dya\_sel \cdot \{dxa(0)\&{}^{\bullet}00000000000\}$ |
| $\geq 12$ | $\overline{dya\_sel} \cdot sxa[23..12]$ |

In Tabelle 2 ist eine Spalte für p, eine Spalte für den Ausgangswert dya, in Tabelle 3 eine Spalte für p und eine Spalte für ein Rundungsbit rb angegeben. Dabei wird vorausgesetzt, daß jeweils 12 Bit breite Zahlen dxa und sa miteinander multipliziert werden und das Ergebnis sxa 24 Bit breit ist. Nach Tabelle 2 wird z.B. für p = 0, bei dem die führende '1' direkt vor dem Komma liegt, vom Ergebnis sxa die Stellen 23 bis 12 als dya abgegeben, für den Fall, daß p = 11 ist, die Stellen 12 bis 1. Es ist also zu erkennen, wie das Produkt sxa im Schaltnetz SHIFT verschoben werden muß, um den richtigen Wert von dya abzugeben. Der Fall, daß p $\geq$ 12 ist, zeigt an, daß keine führende '1' vor dem Komma vorhanden ist, da eine führende '1' vor dem Komma die Bitstellen 11..0 einnehmen kann. Für den Fall, daß dya_sel = 1 ist, wird die Multiplikation von dxa mit $2^p$ durchgeführt, d.h. das Ergebnis sxa des Multiplizierers wird nicht verwendet. Dazu genügt, daß dxa im Schaltnetz SHIFT verschoben wird. Dementsprechend wird dxa dem Schaltnetz SHIFT zugeführt. Das Ausmaß der Verschiebung kann ebenfalls Tabelle 2 entnommen werden. Für den Fall, daß p = 0 ist, findet überhaupt keine Verschiebung statt, für den Fall, daß p = 1 ist, wird dxa um eine Stelle nach links verschoben, es werden also die Stellen 0 bis 10 von dxa verwendet und um eine Null ergänzt, für den Fall, daß p = 11 ist, wird von dxa nur noch die nullte Stelle verwendet, und die übrigen Stellen durch Nullen ergänzt.

In Tabelle 3 wird angegeben, ob eine Rundung erfolgen muß. Dies ist nur dann der Fall, wenn sxa ausgewertet wird. Es ist zu sehen, welche Stellen von sxa für die Rundung herangezogen werden. Das Rundungsbit rb ergibt sich aus den Stellen nach dem Komma des mit SHIFT an die richtige Stelle geschobenen Produktes sxa. rb wird für positive dy, d.h. für vdy = '0' liefert MUX 5 dy = dya, bei der Bestimmung von ye0 in YADD berücksichtigt, da in diesem Fall für rb = '1' aufgerundet werden muß. Für vdy = '1' dagegen muß in YADD eine Subtraktion durchgeführt werden, d.h. der Carry-Eingang ci = vdy + rb erhält unabhängig von rb den Wert '1'. Die für rb = '1' erforderliche Rundung wird deshalb, zusammen mit der Bestimmung von dy, in MUX5 vorgenommen, d.h. MUX5 liefert für vdy = '1' :

$$dy(0) = \overline{rb} \cdot \overline{dya(0)} + rb \cdot dya(0)$$

$$dy(1) = \overline{rb \cdot dya(0)} \cdot \overline{dya(1)} + rb \cdot dya(0)dya(1)$$

.
.
.

$$dy(11) = \overline{rb \cdot dya(0) \cdot dya(1) \cdots dya(10)} \cdot \overline{dya(11)} + {} + rb \cdot dya(0) \cdot dya(1) \cdots dya(10) \cdot dya(11)$$

Tabelle 3

| p | rb |
|---|---|
| 0 | $\overline{dya\_sel} \cdot sxa(11) \cdot \left[ \overline{vdy} + sxa(10) + sxa(9) + ... + sxa(0) \right]$ |
| 1 | $\overline{dya\ sel} \cdot sxa(10) \cdot \left[ \overline{vdy} + sxa(9) + sxa(8) + ... + sxa(0) \right]$ |
| 2 | $\overline{dya\_sel} \cdot sxa(9) \cdot \left[ \overline{vdy} + sxa(8) + sxa(7) + ... + sxa(0) \right]$ |
| $\vdots$ | $\vdots$ |
| 11 | $\overline{dya\_sel} \cdot sxa(0)$ |
| $\geq 12$ | $\overline{dya\_sel} \cdot sxa(11) \cdot \left[ \overline{vdy} + sxa(10) + sxa(9) + ... + sxa(0) \right]$ |

Das Schaltnetz OF, dem dxa und p zugeführt wird, erzeugt ein Signal of, wenn ein Überlauf bei der Multiplikation von dxa mit $2^p$ auftritt. Damit wird angezeigt, daß der Zugehörigkeitswert schon bekannt ist und das Ergebnis des Multiplizierers nicht abgewartet zu werden braucht. Es gilt:

$$ye = 0 \text{ für of} = \text{'1' und vdy} = \text{'1'}$$

$$ye = 2^{12-1} \text{ für of} = \text{'1' und vdy} = \text{'0'}$$

Der weitere Addierer YADD addiert bzw. subtrahiert in einem ersten Schritt das Ergebnis der Multiplikation von dxa mit $2^p$ zu dem mit dem Steuersignal yse_sel durchgeschalteten Wert von ys. Dazu wird ein Multiplexer MUX6 verwendet. Sobald das Ergebnis dieser Operation in ein Register YREG für ye zwischengespeichert ist, wird es mit yse_sel an den Eingang yse Wert von dya, der durch Verschiebung von sxa entsprechend Tabelle 2 entstanden ist, zum Endergebnis ye0 verarbeitet und im Register YREG abgelegt, es sei denn, daß aus vdy und dem Übertragbit coy ein Überlauf vom Addierer YADD festgestellt wird, bei dem der Zugehörigkeitswert wie folgt festgelegt ist:

$$ye = 0 \text{ für vdy} \cdot \overline{coy} = \text{'1'}$$

$$ye = 2^{12-1} \text{ für } \overline{vdy} \cdot coy = \text{'1'}$$

Die für den zeitlichen Ablauf der Berechnung des Zugehörigkeitswertes ye erforderlichen Steuersignale und

12

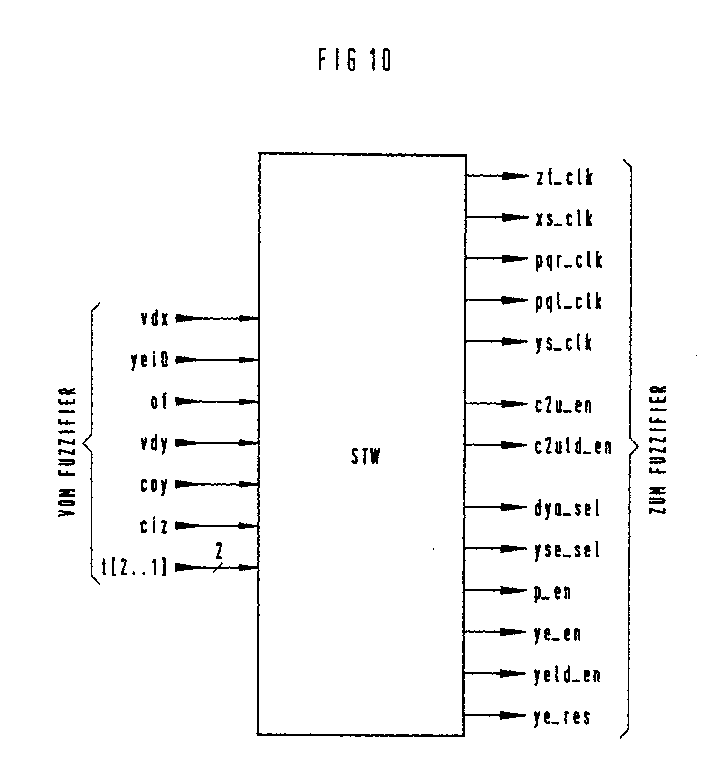

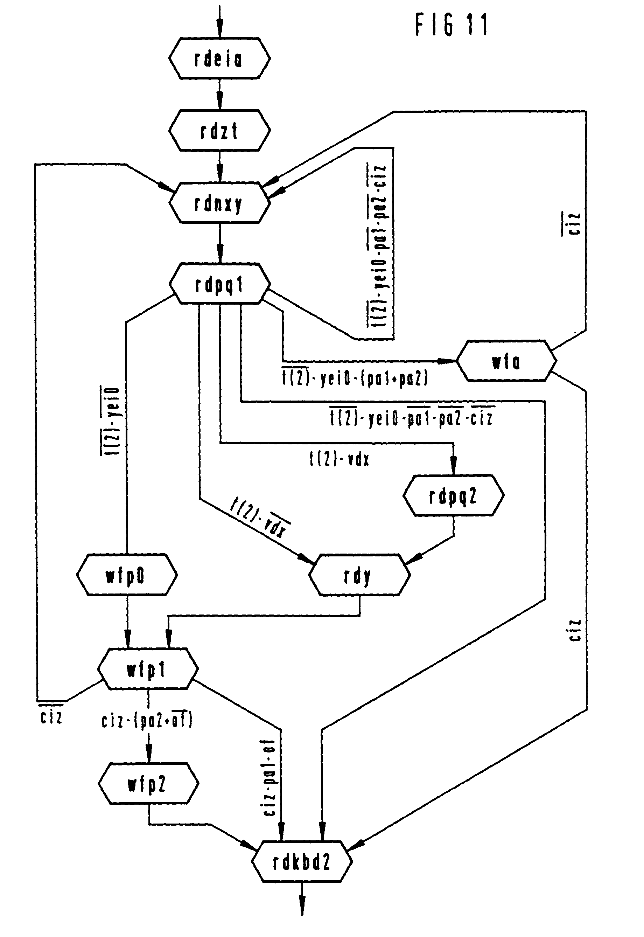

Zustände können anhand eines Zustandsgraphen (Figur 11) für das Steuerwerk STW (Figur 10) verfolgt werden. Das Steuerwerk ist dabei als Schaltwerk bzw. Finite State Machine realisiert. Die Zustände wfp0, wfp1 und wfp2 entsprechen Takten, die zur Multiplikation zweier Zahlen im Multiplizierer PROD erforderlich sind. Dabei ist angenommen, daß für eine Multiplikation zweier 12 Bit Zahlen drei Takte aus Gründen der Leistungs- und Flächenersparnis erforderlich sind.

Mit dem Zustand rdeia (read EIA) wird die Startadresse des Speichersektors IMFD aus dem Speicher KBM ausgelesen. Mit dem Zustand rdzt wird das dieser Startadresse entsprechende erste Speicherwort SW0 in IMFD ausgelesen. Das erste Speicherwort SW0 enthält die Anzahl zimf der getroffenen Zugehörigkeitsfunktionen pro Elementarintervall sowie deren Typennummern. Der Zähler CNT2U wird geladen, das Register YREG für ye wird zurückgesetzt.

Im Zustand rdnxy (read x oder y) wird das erste Wort SW1 des Speichersektors, das die IMF-Daten enthält, ausgelesen, nämlich nimf sowie $\overline{xs}$ oder ys, und in die Latchspeicher LAT4 oder LAT7 eingeschrieben. Der Zähler CNT2U wird um eine Einheit weiter gezählt, um aus dem Speicherwort SW0 die Typennummer zu entnehmen.

Der Zustand rdnxy kann im Zuge der Berechnung vorhergehender IMF-Werte auch von rdpq1 oder wfa oder wfp1 aus erreicht worden sein.

Im nächsten Zustand rdpq1 wird das zweite Wort SW2 aus dem Speichersektor für die IMF-Daten ausgelesen, in dem pl und ql oder pr und qr steht. Diese werden in die Latchspeicher 5 und 6 eingeschrieben.

Im Zustand wfa wird ein in rdpq1 berechneter Zugehörigkeitswert der vorhergehenden Zugehörigkeitsfunktion an die Inferenzeinheit FIN weitergegeben. Gleichzeitig wird für den folgenden Zustand die Weitergabe eines schon bekannten Wertes ye der aktuellen Zugehörigkeitsfunktion vorbereitet, und die Statusbits des Multiplizierers pa1 und pa2 werden rückgesetzt. Abhängig vom Wert des Signals ciz wird entweder rdnxy oder rdkbd2 als nächster Zustand ausgewählt.

Im Zustand wfp0 wird die Addition von $2^p \cdot dxa$ und ys durchgeführt und das Ergebnis im Register YREG abgelegt.

Im Zustand rdqp2 wird das dritte Wort SW3 des Speichersektors von IMF-Daten mit pl und ql ausgelesen und in den Latchspeicher LAT6 geschrieben.

Im Zustand rdy wird das vierte Wort SW4 des Speichersektors, also ys, ausgelesen und in den Latchspeicher LAT7 eingeschrieben.

Im Zustand wfp1 hängen die Aktionen und die nächsten Zustände von der Vorgeschichte ab, wie Figur 11 dies auch zeigt. Falls wfp1 von wfp0 aus erreicht wurde, ist der Multiplizierer PROD weiterhin aktiv, wenn bei der Addition von $2^p \cdot dxa$ und ys kein Überlauf aufgetreten ist (dies wird mit of angezeigt). Falls wfp1 von rdy aus erreicht wurde, bleibt der Multiplizierer PROD ebenfalls aktiv und es wird die Addition von $2^p \cdot dxa$ und ys durchgeführt und das Ergebnis in YREG abgelegt. Auf wfp1 können der Zustand rdnxy für ciz = 0 folgen, wenn noch weitere IMF-Daten auszuwerten sind oder der Zustand rdkbd2, mit dem der Wert ye an die Einheit FIN weitergegeben wird, oder der Zustand wfp2, der im folgenden behandelt wird.

Im Zustand wfp2 bleibt der Multiplizierer PROD aktiv. Sein Ergebnis sxa wird mit Beginn des nächsten Zustandes rdkbd2 gültig und kann dann zum Endergebnis ye weiterverarbeitet werden.

Im Zustand rdkbd2 werden das Ergebnis sxa und das in YREG gespeicherte Zwischenergebnis zum Endergebnis ye weiterverarbeitet und an die Einheit FIN weitergegeben. Falls rdkbd2 von rdpq1, wfa oder wfp1 aus erreicht wurde, wird der schon bekannte Zugehörigkeitswert ye der letzten Zugehörigkeitsfunktion an FIN weitergegeben.

Die Erläuterung der Figur 11 beschränkte sich auf die wesentlichen Zustände des Steuerwerkes. Aus den Angaben zu den Übergängen zwischen den Zuständen kann unter Verwendung der Erläuterung der Fuzzifier-Schaltung erkannt werden, wie die einzelnen Zustände ablaufen. Dabei sind die Signale pa1 und pa2 Statussignale für den Multiplizierer PROD, mit rd ist das Wort read abgekürzt. Mit dem Wert '1' der Signale pal oder pa2 (pa entspricht prod active) wird angezeigt, daß der Multiplizierer PROD im jeweils vorausgehenden Zustand aktiviert wurde oder noch aktiv war. Zusätzlich wird mit pa1 = '1' angezeigt, daß PROD im Zustand wfpo aktiviert wurde, und mit pa2 = '1', daß PROD im Zustand rdy aktiviert wurde.

**Patentansprüche**

1. Verfahren zur Speicherung von Eingangszugehörigkeitsfunktionen (ZF) und zur Fuzzifizierung von an Eingängen eines Fuzzyprozessors anliegenden digitalen Eingangssignalen (xe) unter Verwendung dieser Eingangszugehörigkeitsfunktionen (ZF),

    a) bei dem jede Zugehörigkeitsfunktion (ZF) mit Hilfe einer jeweils die Form der Zugehörigkeitsfunktion enthaltenden Forminformation gespeichert wird,
    b) bei dem der Grundbereich des mit ae Bit (ae=Anzahl der Bit) aufgelösten Eingangssignals jedes Eingangs in Elementarintervalle (EI) eingeteilt wird,

c) bei dem die Forminformation einer Zugehörigkeitsfunktion pro Elementarintervall (EI) jeweils die Werte (xs, ys) von Stützstellen (STS), an denen sich die Steigung der Zugehörigkeitsfunktion innerhalb des Elementarintervalls ändert oder die Zugehörigkeitsfunktion die Grenzen des Elementarintervalls schneidet, und die von den Stützstellen (STS) ausgehenden im Elementarintervall verlaufenden Steigungen (S) der Zugehörigkeitsfunktion enthält,

d) bei dem die Einteilung des Grundbereichs in Elementarintervalle (EI) nach der Aufteilungsbedingung erfolgt, daß jede Zugehörigkeitsfunktion innerhalb eines Elementarintervalls genau eine Stützstelle (STS) aufweist,

e) bei dem festgestellt wird, welche der im Elementarintervall vorhandenen Zugehörigkeitsfunktionen durch das Eingangssignal getroffen werden,

f) und bei dem der Zugehörigkeitswert (ye) des Eingangssignales (xe) für jede getroffene Zugehörigkeitsfunktion (ZF) ermittelt wird.

2. Verfahren nach Anspruch 1, bei dem die Anzahl der Zugehörigkeitsfunktionen pro Elementarintervall höchstens vier ist.

3. Verfahren nach einem der Ansprüche 1 oder 2, bei dem die Auswahl eines Elementarintervalls mit Hilfe der aei Most Significant Bits (aei=Anzahl der Bit) des Eingangssignales erfolgt.

4. Verfahren nach einem der Ansprüche 1 bis 3,

a) bei dem der Grundbereich solange in gleich große Intervalle unterteilt wird bis mindestens eines der Intervalle die Aufteilungsbedingung erfüllt, wobei dieses Intervall dann unverändert bleibt und ein Elementarintervall bildet (Elementarintervall erste Stufe),

b) bei dem jeweils die Intervalle, die nach der ersten Unterteilung die Aufteilungsbedingung nicht erfüllen, unabhängig voneinander solange weiter unterteilt werden bis mindestens eines dieser Intervalle zweiter Stufe die Aufteilungsbedingung erfüllt, wobei dieses Intervall dann unverändert bleibt und ein Elementarintervall bildet (Elementarintervall zweiter Stufe),

c) bei dem für die Intervalle, die nach einer vorhergehenden Unterteilung die Aufteilungsbedingung nicht erfüllen entsprechend b) weiter unterteilt werden bis die dabei entstehenden Intervalle jeweils die Aufteilungsbedingung erfüllen, wobei die Intervalle, die der Aufteilungsbedingung genügen, jeweils unverändert bleiben und ein Elementarintervall bilden (Elementarintervall höherer Stufe).

5. Verfahren nach einem der Ansprüche 1 bis 3, bei dem die Elementarintervalle gleich groß sind.

6. Verfahren nach Anspruch 5, bei dem die Anzahl (nei) von Elementarintervallen eine Potenz von 2 ist und aei Most Significant Bits des den Grundbereich festlegenden Eingangssignales den Exponenten bilden.

7. Verfahren nach einem der Ansprüche 1 bis 4, bei dem die gespeicherte Forminformation für jede Zugehörigkeitsfunktion eine Nummer, die Stützstellenwerte und eine Steigungsinformation enthält.

8. Verfahren nach Anspruch 7, bei der die Steigungsinformation aus zwei Teilen besteht, bei der der erste Teil p die Bitstelle der führenden '1' vor dem Komma des Absolutbetrages der Steigung sa angibt oder angibt, daß alle Stellen vor dem Komma '0' sind, bei der der zweite Teil q aus dem auf die führende '1' vor dem Komma folgenden Bits gewonnen wird oder, falls es vor dem Komma keine führende '1' gibt, aus den Stellen nach dem Komma des Absolutbetrages sa gewonnen wird.

9. Verfahren nach Anspruch 7 oder 8, bei dem den unterschiedlichen Formen der Zugehörigkeitsfunktionen jeweils eine Typennummer zugeordnet wird, daß ein Bit der Typennummer angibt, ob innerhalb des Elementarintervalls die von der Stützstelle ausgehende Kurventeile der Zugehörigkeitsfunktion nur eine Steigung oder zwei unterschiedliche Steigungen aufweist und zwei weitere Bit der Typennummer die Vorzeichen der Steigungen angeben.

10. Verfahren nach Anspruch 9, bei dem die Forminformation der Zugehörigkeitsfunktion pro Eingang in einem Speicher (KBM) abgespeichert wird und auf folgende Weise adressiert wird:

In einem ersten Speicherwort (KBD1) wird eine erste Adresse gespeichert, mit der ein zweites Speicherwort (EAD) adressierbar ist, in dem kodiert die Anzahl von Elementarintervallen pro Eingang für alle Eingänge gespeichert wird, für jedes Elementarintervall pro Eingang wird ein drittes Speicherwort (EIA) gespeichert, in dem die Startadresse des Speichersektors enthalten ist, der die Forminformationen der Zugehörigkeitsfunktionen pro Elementarintervall und Eingang enthält, und das durch Verknüpfung von aei Most Significant Bits des Eingangssignales (xe) und der Anzahl (nei) adressiert wird.

**11.** Verfahren nach Anspruch 4 oder 9, bei dem die Forminformation der Zugehörigkeitsfunktion pro Eingang in einem Speicher (KBM) abgespeichert wird und auf folgende Weise adressiert wird:

a) in einem ersten Speicherwort (KBD1) wird eine erste Adresse gespeichert, mit der ein zweites Speicherwort (EAD) adressierbar ist, in dem codiert die Anzahl von Intervallen erster Stufe gespeichert wird,
b) mit Hilfe des Inhaltes des zweiten Speicherwortes (EAD) und der most significant bits des Eingangssignales (xe) wird ein drittes Speicherwort (EIA) adressiert, bei dem mindestens eine Stelle angibt, ob das von den most significant bits des Eingangssignales (xe) festgelegte Intervall erster Stufe ein Elementarintervall ist,

ba) für diesen Fall aus den weiteren Stellen des dritten Speicherwortes die Startadresse des Speichersektors entnommen wird, indem die Forminformationen der Zugehörigkeitsfunktionen des getroffenen Elementarintervalls gespeichert sind,
bb) sonst unter Verwendung der most significant bits des Eingangssignals ein weiteres Speicherwort adressiert wird, in dem mindestens eine Stelle angibt, ob das von den most significant bits getroffene Intervall zweiter Stufe ein Elementarintervall ist und für diesen Fall aus den weiteren Stellen des weiteren Speicherwortes die Startadresse des Speichersektors entnommen wird, in dem die Forminformationen der Zugehörigkeitsfunktionen des getroffenen Elementarintervalls gespeichert sind, sonst wie bb) weitergegangen wird, bis aus den adressierten weiteren Speicherworten erkennbar ist, daß das von dem most significant bit getroffene Intervall ein Elementarintervall ist und der zugeordnete Speichersektor gefunden ist.

**12.** Verfahren nach Anspruch 10 oder 11, bei dem der Speichersektor für die Zugehörigkeitsfunktionen für jedes Elementarintervall folgende Informationen enthält:

In einem ersten Speicherwort (SW0) ist die Anzahl (zimf) der Zugehörigkeitsfunktionen pro Elementarintervall und die Typennummern der Zugehörigkeitsfunktionen in diesem Elementarintervall gespeichert,
in weiteren Speicherworten sind die Nummer der Zugehörigkeitsfunktionen, die Stützstellenwerte, die Steigungsinformation gespeichert.

**13.** Schaltungsanordnung zur Durchführung der Fuzzifizierung von Eingangssignalen nach Anspruch 12,

bei der ein an einen Bus zum Speicher (KBM) angeschlossener Latchspeicher (LAT3) zur Speicherung des aus dem Speicher ausgelesenen ersten Speicherwortes des Sektors für die Zugehörigkeitsfunktionen vorgesehen ist,
bei der dem Latchspeicher (LAT3) ein Multiplexer (MUX4) nachgeschaltet ist, der aus dem ersten Speicherwort die Typennummer (t) auswählt,
bei der ein Zähler (CNT2U) vorgesehen ist, dessen Ausgang mit dem Steuereingang des Multiplexers (MUX4) und einer Komparatorschaltung (KOM) verbunden ist, der am zweiten Eingang die Anzahl (zimf) von Zugehörigkeitsfunktionen pro Elementarintervall vom Latchspeicher (LAT3) zugeführt wird,
bei der jeweils ein mit dem Bus (IKAD) verbundener Latchspeicher (LAT4, LAT5, LAT6, LAT7) zur Zwischenspeicherung der Werte $\overline{xs}$, ys, p, q vorgesehen ist,
und bei der eine Rechenschaltung (YEC) zur Berechnung des Zugehörigkeitswertes (ye) nach der Formel

$$ye = ys + (-1)^{vdy} \cdot (sa \cdot dxa)$$

vorgesehen ist, wobei gilt:

ys = Stützstellenwert in der y-Richtung,
sa = Absolutbetrag der Steigung,
dxa = Absolutbetrag der Differenz dx = xe-xs,
xs = Stützstellenwert in x-Richtung,
vdy = Vorzeichen der Differenz ye-ys,
P = Bitstelle der Führende '1' vor dem komma von sa, oder Angabe daß alle stellen vor dem komma '0' sind,

g = Wert, gewonner aus dem auf die Führende '1' vor dem Komma Folgenden BITS oder, Falls es vor dem Komma Keine Führende '1' gibt, aus dem Stellen nach dem Komma von sa.

**14.** Schaltungsanordnung nach Anspruch 13, bei der die Rechenschaltung (YEC) folgende Schaltungen aufweist:

Ein erstes Schaltnetzwerk (XSEQ, XADD) zur Bildung von dx,
ein zweites Schaltnetzwerk (ABX) zur Bildung von dxa, das mit dem ersten Schaltnetzwerk verbunden ist,
einen Multiplizierer (PROD) zur Erzeugung des Produktes sxa aus sa und dxa,
einen Addierer (YADD) zur Addition von sxa mit ys zum Ergebnis ye.

**15.** Schaltungsanordnung nach Anspruch 14, bei der dem Multiplizierer ein drittes Schaltnetz (SHIFT) nachgeschaltet ist, das sxa entsprechend p an die richtige Position verschiebt und bei der ein weiterer Multiplexer (MUX 5) vorgesehen ist, der das verschobene sxa als dy an den Addierer (Y ADD) anlegt.

**16.** Schaltungsanordnung nach Anspruch 15, bei der mit einem aus den Stellen nach dem Komma des mit dem dritten Schaltnetz (SHIFT) an die richtige Stelle geschobenen Produktes sxa gewonnenen Rundungsbit (rb) die Rundung von dy abhängig von vdy im fünften Multplexer (MUX 5) durchgeführt wird.

**17.** Schaltungsanordung nach Anspruch 15, bei der mit dem dritten Schaltnetz (SHIFT) der Wert von $2^p \cdot dxa$ berechnet wird und über den weiteren Multiplexer (MUX5) dem Addierer (YADD) zugeführt wird, bei dem ein Register (YREG) vorgesehen ist, in dem das Ergebnis der Addierers (YADD) zwischengespeichert wird und bei dem ein Multiplexer (MUX6) vorgesehen ist, der einerseits den Ausgang des Registers (YREG), andererseits den Wert ys an einen Eingang des Addierers (YADD) anlegen kann.

**18.** Schaltungsanordnung nach einem der Ansprüche 14 bis 17, bei der ein viertes Schaltnetzwerk (OF) vorgesehen ist, das p mit dxa verknüpft, um festzustellen, ob ein Überlauf vorliegt.

**19.** Schaltungsanordnung nach einem der Ansprüche 14 bis 18, bei der das erste Schaltnetzwerk eine Schaltung zur Bildung des Einerkomplementes (XSEQ) von xs und einen als Subtrahierer geschalteten zweiten Addierer (XADD) aufweist, der aus dem Eingangssignal (xe), dem Stützstellenwert (xs, aei) und der Typennummer (t) die Differenz dx = xe-xs bildet.

**20.** Schaltungsanordnung nach einem der Ansprüche 14 bis 19, bei der ein fünftes Schaltnetzwerk (SEL) vorgesehen ist, der die Typennummer, das Vorzeichen (vdx) von dx , die Steigungsinformation p und q zugeführt wird, und die daraus das Vorzeichen vdy von dy, die Steigung sa, den Wert von p und ein Signal (yei0) abgibt, das anzeigt, daß der Wert von ye = 0 sein muß.

### Claims

**1.** Method for storing input membership functions (ZF) and for fuzzifying digital input signals (xe) present at the inputs of a fuzzy processor by using these input membership functions (ZF),

a) in which method each membership function (ZF) is stored with the aid of shape information respectively containing the shape of the membership function,
b) in which method the basic range of the input signal, resolved with ae bits (ae=number of the bits), of each input is divided into elementary intervals (EI),
c) in which method the shape information of a membership function contains per elementary interval (EI) the respective values (xs, ys) of restart points (STS), at which the slope of the membership function changes inside the elementary interval or the membership function intersects the boundaries of the elementary interval, and contains the slopes (S) of the membership function which start from the restart points (STS) and extend in the elementary interval,
d) in which method the division of the basic range into elementary intervals (EI) is performed in accordance with the division condition that each membership function inside an elementary interval, has precisely one restart point (STS)
e) in which method it is determined which of the membership functions present in the elementary interval are hit by the input signal,
f) and in which method the membership value (ye) of the input signal (xe) is determined for each membership function (ZF) hit.

2. Method according to Claim 1, in which the number of the membership functions per elementary interval is at most four.

3. Method according to one of Claims 1 or 2, in which the selection of an elementary interval is performed with the aid of the aei most significant bits (aei=number of the bits) of the input signal.

4. Method according to one of Claims 1 to 3,

a) in which the basic range is subdivided into intervals of equal size until at least one of the intervals fulfils the division condition, this interval then remaining unchanged and forming an elementary interval (elementary interval of first stage),
b) in which the intervals which do not fulfil the division condition after the first subdivision are respectively further subdivided independently of one another until at least one of these intervals of the second stage fulfils the division condition, this interval then remaining unchanged and forming an elementary interval (elementary interval of second stage),
c) in which for the intervals which do not fulfil the division condition after a preceding subdivision further subdivision is performed in accordance with b) until the intervals produced in the process respectively fulfil the division condition, the intervals which satisfy the division condition respectively remaining unchanged and forming an elementary interval (elementary interval of higher stage).

5. Method according to one of Claims 1 to 3, in which the elementary intervals are of equal size.

6. Method according to Claim 5, in which the number (nei) of elementary intervals is a power of 2, and aei most significant bits of the input signal fixing the basic range form the exponent.

7. Method according to one of Claims 1 to 4, in which the stored shape information contains for each membership function a number, the restart point values and slope information.

8. Method according to Claim 7, in which the slope information comprises two parts, in which the first part b specifies the bit position of the leading '1' in front of the decimal point of the absolute value of the slope sa, or specifies that all the positions in front of the decimal point are '0', and in which the second part q is obtained from the bit following the leading '1' in front of the decimal point or, if there is no leading '1' in front of the decimal point, is determined from the positions after the decimal point of the absolute value sa.

9. Method according to Claim 7 or 8, in which the different shapes of the membership functions are respectively assigned a type number, in which one bit of the type number specifies whether inside the elementary interval the partial curve of the membership function which starts from the restart point has only one slope or two different slopes, and in which two further bits of the type number specify the sign of the slopes.

10. Method according to Claim 9, in which the shape information of the membership function is stored per input in a memory (KBM) and addressed in the following way:
In a first memory word (KBD1) a first address is stored with which it is possible to address a second memory word (EAD) in which the number of elementary intervals per input for all the inputs is stored in a coded fashion, and in which for each elementary interval a third memory word (EIA) is stored per input in which the start address of that memory sector is contained which contains the shape information of the membership functions per elementary interval and input, and which third memory word is addressed by combining aei most significant bits of the input signal (xe) and number (nei).

11. Method according to Claim 4 or 9, in which the shape information of the membership function is stored per input in a memory (KBM) and addressed in the following way:

a) there is stored in a first memory word (KBD1) a first address with which a second memory word (EAD) can be addressed in which the number of intervals of the first stage is stored in a coded fashion,
b) with the aid of the content of the second memory word (EAD) and the most significant bits of the input signal (xe) a third memory word (EIA) is addressed in which at least one position specifies whether the interval of the first stage fixed by the most significant bits of the input signal (xe) is an elementary interval,

ba) in this case, the start address of the memory sector is taken from the further positions of the third memory word by storing the shape information of the membership functions of the elementary interval hit,

bb) otherwise the most significant bits of the input signal are used to address a further memory word in which at least one position specifies whether the interval, hit by the most significant bit, of the second stage is an elementary interval, and in this case there is taken from the further positions of the further memory word the start address of that memory sector in which the shape information of the membership functions of the elementary interval hit is stored, otherwise the procedure is continued as in bb) until it can be detected from the further addressed memory words that the interval hit by the most significant bit is an elementary interval and the assigned memory sector is found.

**12.** Method according to Claim 10 or 11, in which the memory sector for the membership functions for each elementary interval contains the following information:

In a first memory word (SW0), the number (zimf) of the membership functions per elementary interval and the type numbers of the membership functions in this elementary interval are stored,
and the numbers of the membership functions, the restart point values and the slope information are stored in further memory words.

**13.** Circuit arangement for carrying out the fuzzification of input signals according to Claim 12,

in which a latch memory (LAT3) connected to a bus to the memory (KBM) is provided for storing the first memory word, read out from the memory, of the sector for the membership functions,
in which connected downstream of the latch memory (LAT3) is a multiplexer (MUX4) which selects the type number (t) from the first memory word,
in which a counter (CNT2U) is provided whose output is connected to the control input of the multiplexer (MUX4) and a comparator circuit (KOM) to which at the second input the number (zimf) of membership functions per elementary interval is fed by the latch memory (LAT3),
in which a latch memory (LAT4, LAT5, LAT6, LAT7) connected to the bus (IKAD) is provided in each case for buffering the values $\overline{xs}$, ys, p, q,
and in which a calculating circuit (YEC) is provided for calculating the membership value (ye) according to the formula

$$ye = ys + (-1)^{vdy \cdot} (sa.dxa)$$

in which it holds that:

ys = restart point value in y-direction,
sa = absolute value of the slope,
dxa = absolute value of the difference dx = xe-xs
xs = restart point value in x-direction, and
vdy = sign of the difference ye-ys,
p = bit position of the leading " 1" in front of the decimal point of sa, or specification that all positions in front of the decimal point are " 0" , and
q = value obtained from the BITS following the leading "1" in front of the decimal point or, if there is no leading " 1" in front of the decimal point, from the positions after the decimal point of sa.

**14.** Circuit arrangement according to Claim 13, in which the calculating circuit (YEC) has the following circuits:

a first switching network (XSEQ, XADD) for forming dx, a second switching network (ABX) for forming dxa, which is connected to the first switching network,
a multiplier (PROD) for generating the product sxa from sa and dxa, and an adder (YADD) for adding sxa to ys to form the result ye.

**15.** Circuit arrangement according to Claim 14, in which connected downstream of a multiplier is a third switching network (SHIFT) which shifts sxa in accordance with p to the correct position, and in which a further multiplexer (MUX 5) is provided which applies the shifted sxa as dy to the adder (YADD).

**EP 0 757 811 B1**

16. Circuit arrangement according to Claim 15, in which a rounding bit (rb) obtained from the positions after the decimal point of the product sxa shifted to the correct position by means of the third switching network (SHIFT) is used to carry out the rounding of dy as a function of vdy in the fifth multiplexer (MUX 5).

17. Circuit arrangement according to Claim 15, in which the third switching network (SHIFT) is used to calculate the value of $2^p$Adxa and feed it to the adder (YADD) via the further multiplexer (MUX5), in which a register (YREG) is provided in which the result of the adder (YADD) is buffered, and in which a multiplexer (MUX6) is provided which can apply the output of the register (YREG), on the one hand, and the value ys, on the other hand, to an input of the adder (YADD).

18. Circuit arrangement according to one of Claims 14 to 17, in which a fourth switching network (OF) is provided which combines p with dxa in order to determine whether an overflow is present.

19. Circuit arrangement according to one of Claims 14 to 18, in which the first switching network has a circuit for forming the one's complement (XSEQ) of xs and a second adder (XADD), which is connected as a subtractor and forms the difference dx = xe-xs from the input signal (xe), the restart point value (xs, aei) and the type number (t).

20. Circuit arrangement according to one of Claims 14 to 19, in which a fifth switching network (SEL) is provided which is ed the type number, the sign (vdx) of dx and the slope information p and q, and which outputs therefrom the sign vdy of dy, the slope sa, the value of p and a signal (yei0) which indicates that the value of ye must be 0.

**Revendications**

1. Procédé pour la mémorisation de fonctions d'appartenance d'entrée (ZF) et pour la mise en logique floue de signaux d'entrée numériques (xe), présents à des entrées d'un processeur à logique floue, en utilisant ces fonctions d'appartenance d'entrée (ZF),

    a) dans lequel on mémorise chaque fonction d'appartenance (ZF) à l'aide d'une information de forme contenant à chaque fois la forme de la fonction d'appartenance,
    b) dans lequel on divise en intervalles élémentaires (EI) la plage fondamentale du signal d'entrée, défini avec ae bits (ae = nombre des bits), de chaque entrée,
    c) dans lequel l'information de forme d'une fonction d'appartenance pour chaque intervalle élémentaire (EI) contient à chaque fois les valeurs (xs, ys) de points de référence (STS), auxquels 1a pente de la fonction d'appartenance à l'intérieur de l'intervalle élémentaire varie ou auxquels la fonction d'appartenance coupe les limites de l'intervalle élémentaire, et les pentes (S), s'étendant dans l'intervalle élémentaire à partir des points de référence (STS), de la fonction d'appartenance,
    d) dans lequel la division de la plage fondamentale en intervalles élémentaires (EI) s'effectue selon la condition de répartition qui veut que chaque fonction d'appartenance comporte à l'intérieur d'un intervalle élémentaire exactement un point de référence (STS),
    e) dans lequel on détermine quelles fonctions d'appartenance présentes dans l'intervalle élémentaire sont concernées par le signal d'entrée,
    f) et dans lequel on détermine la valeur d'appartenance (ye) du signal d'entrée (xe) pour chaque fonction d'appartenance concernée (ZF).

2. Procédé selon la revendication 1, dans lequel le nombre des fonctions d'appartenance par intervalle élémentaire est au maximum quatre.

3. Procédé selon l'une des revendications 1 ou 2, dans lequel la sélection d'un intervalle élémentaire s'effectue à l'aide des aei Most Significant Bits (aei = nombre des bits) du signal d'entrée.

4. Procédé selon l'une des revendications 1 à 3,

    a) dans lequel on divise la plage fondamentale en intervalles de grandeur identique jusqu'à ce qu'au moins l'un des intervalles satisfasse à la condition de répartition, cet intervalle restant alors inchangé et formant un intervalle élémentaire (intervalle élémentaire de premier étage),
    b) dans lequel on divise encore à chaque fois les intervalles, qui ne satisfont pas à la condition de répartition après la première division, indépendamment les uns des autres, jusqu'à ce qu'au moins l'un de ces intervalles

**19**

satisfasse à la condition de répartition, cet intervalle restant alors inchangé et formant un intervalle élémentaire (intervalle élémentaire de deuxième étage),

c) dans lequel on divise encore selon b) les intervalles, qui ne satisfont pas à la condition de répartition après une division précédente, jusqu'à ce que les intervalles alors formés satisfassent à chaque fois à la condition de répartition, les intervalles qui satisfont à la condition de répartition restant à chaque fois inchangés et formant un intervalle élémentaire (intervalle élémentaire d'un étage supérieur).

**5.** Procédé selon l'une des revendications 1 à 3, dans lequel les intervalles élémentaires sont de grandeur identique.

**6.** Procédé selon la revendication 5, dans lequel le nombre (nei) d'intervalles élémentaires est une puissance de 2 et dans lequel aei Most Significant Bits du signal d'entrée fixant la plage fondamentale forment l'exposant.

**7.** Procédé selon l'une des revendications 1 à 4, dans lequel l'information de forme mémorisée pour chaque fonction d'appartenance contient un numéro, les valeurs de point de référence et une information de pente.

**8.** Procédé selon la revendication 7, dans lequel l'information de forme est constituée de deux parties, la première partie p indiquant la position binaire du premier '1' avant la virgule de la valeur absolue de la pente sa ou indiquant que toutes les positions avant la virgule sont '0' et la deuxième partie q étant obtenue à partir des bits qui suivent le premier '1' avant la virgule ou, s'il n'y a pas de premier '1' avant la virgule, à partir des positions après la virgule de la valeur absolue sa.

**9.** Procédé selon la revendication 7 ou 8, dans lequel on associe aux différentes formes des fonctions d'appartenance à chaque fois un numéro de type de telle sorte qu'un bit du numéro de type indique si, à l'intérieur de l'intervalle élémentaire, les parties de courbe, partant du point de référence, de la fonction d'appartenance comportent une seule pente ou deux pentes différentes et deux autres bits du numéro de type indiquent les signes des pentes.

**10.** Procédé selon la revendication 9, dans lequel on mémorise l'information de forme de la fonction d'appartenance pour chaque entrée dans une mémoire (KBM) et on l'adresse de la manière suivante :

dans un premier mot de mémoire (KBD1), on mémorise une première adresse avec laquelle est adressable un deuxième mot de mémoire (EAD) dans lequel est mémorisé le nombre d'intervalles élémentaires par entrée pour toutes les entrées,

pour chaque intervalle élémentaire par entrée, on mémorise un troisième mot de mémoire (EIA) qui contient l'adresse de début du secteur de mémoire contenant les informations de forme des fonctions d'appartenance pour chaque intervalle élémentaire et pour chaque entrée et qui est adressé par une combinaison de aei Most Significant Bits du signal d'entrée (xe) et du nombre (nei).

**11.** Procédé selon la revendication 4 ou 9, dans lequel on mémorise l'information de forme de la fonction d'appartenance pour chaque entrée dans une mémoire (KBM) et on l'adresse de la manière suivante :

a) on mémorise dans un premier mot de mémoire (KBD1) une première adresse avec laquelle est adressable un deuxième mot de mémoire (EAD) dans lequel est mémorisé sous forme codée le nombre d'intervalles du premier étage,

b) à l'aide du contenu du deuxième mot de mémoire (EAD) et des Most Significant Bits du signal d'entrée (xe), on adresse un troisième mot de mémoire (EIA) dans lequel au moins une position indique si l'intervalle de premier étage fixé par les Most Significant Bits du signal d'entrée (xe) est un intervalle élémentaire,

ba) dans ce cas, on extrait des autres positions du troisième mot de mémoire l'adresse de début du secteur de mémoire dans lequel sont mémorisées les informations de forme des fonctions d'appartenance de l'intervalle élémentaire concerné,

bb) sinon, en utilisant les Most Significant Bits du signal d'entrée, on adresse un autre mot de mémoire dans lequel au moins une position indique si l'intervalle de deuxième étage concerné par les Most Significant Bits est un intervalle élémentaire et, dans ce cas, on extrait des autres positions de l'autre mot de mémoire l'adresse de début du secteur de mémoire dans lequel sont mémorisées les informations de forme des fonctions d'appartenance de l'intervalle élémentaire concerné, sinon on continue comme en bb) jusqu'à pouvoir reconnaître à partir des autres mots de mémoire adressés que l'intervalle concerné par le Most Significant Bit est un intervalle élémentaire et que le secteur de mémoire associé est trouvé.

**12.** Procédé selon la revendication 10 ou 11, dans lequel le secteur de mémoire pour les fonctions d'appartenance pour chaque intervalle élémentaire contient les informations suivantes :

dans un premier mot de mémoire (SW0) est mémorisé le nombre (zimf) des fonctions d'appartenance par intervalle élémentaire et les numéros de type des fonctions d'appartenance dans cet intervalle élémentaire, dans d'autres mots de mémoire sont mémorisés les numéros des fonctions d'appartenance, les valeurs de point de référence et l'information de pente.

**13.** Circuit pour la mise en oeuvre de la mise en logique floue de signaux d'entrée selon la revendication 12,

dans lequel une mémoire de verrouillage (LAT3) raccordée à un bus vers la mémoire (KBM) est prévue pour mémoriser le premier mot de mémoire, lu dans la mémoire, du secteur pour les fonctions d'appartenance, dans lequel un multiplexeur (MUX4) qui sélectionne à partir du premier mot de mémoire le numéro de type (t) est branché du côté aval de la mémoire de verrouillage (LAT3), dans lequel il est prévu un compteur (CNT2U) dont la sortie est reliée à l'entrée- de commande du multiplexeur (MUX4) et d'un circuit comparateur (KOM) à la deuxième entrée duquel est envoyé depuis la mémoire de verrouillage (LAT3) le nombre (zimf) de fonctions d'appartenance par intervalle élémentaire, dans lequel une mémoire de verrouillage (LAT4, LAT5, LAT6, LAT7) reliée au bus (IKAD) est. prévue respectivement pour la mémorisation temporaire des valeurs $\overline{xs}$, ys, p, q, et dans lequel un circuit de calcul (YEC) est prévu pour le calcul de la valeur d'appartenance (ye) selon la formule

$$ye = ys + (-1)^{vdy} \cdot (sa \cdot dxa)$$

avec :

ys = valeur de point de référence dans la direction y,
sa = valeur absolue de la pente,
dxa = valeur absolue de la différence dx = xe - xs,
xs = valeur de point de référence dans la direction x,
vdy = signe de la différence ye - ys,
p = position binaire du premier '1' avant la virgule de sa ou indication que toutes les positions avant la virgule sont '0',
q = valeur obtenue à partir des bits qui suivent le premier '1' avant la virgule ou, s'il n'y a pas de premier '1' avant la virgule, à partir des positions après la virgule de sa.

**14.** Circuit selon la revendication 13, dans lequel le circuit de calcul (YEC) comporte les circuits suivants :

un premier réseau combinatoire (XSEQ, XADD) pour former dx,
un deuxième réseau combinatoire (ABX) pour former dxa et relié au premier réseau combinatoire,
un multiplicateur (PROD) pour produire le produit sxa à partir de sa et dxa,
un additionneur (YADD) pour additionner sxa et ys et donner ainsi le résultat ye.

**15.** Circuit selon la revendication 14, dans lequel un troisième réseau combinatoire (SHIFT) qui décale sxa selon p à la bonne position est branché du côté aval du multiplicateur et dans lequel un autre multiplexeur (MUX5) est prévu pour appliquer le sxa décalé comme dy à l'additionneur (YADD).

**16.** Circuit selon la revendication 15, dans lequel, avec un bit d'arrondi (rb) obtenu à partir des positions après la virgule du produit sxa décalé avec le troisième réseau combinatoire (SHIFT) à la bonne position, l'arrondi de dy en fonction de vdy est effectué dans le cinquième multiplexeur (MUX5).

**17.** Circuit selon la revendication 15, dans lequel, avec le troisième réseau combinatoire (SHIFT), la valeur de $2^{p} \cdot dxa$ est calculée et est envoyée par l'intermédiaire de l'autre multiplexeur (MUX5) à l'additionneur (YADD), dans lequel il est prévu un registre (YREG) dans lequel est mémorisé temporairement le résultat de l'additionneur (YADD) et dans lequel il est prévu un multiplexeur (MUX6) qui peut appliquer à une entrée de l'additionneur (YADD) d'une part la sortie du registre (YREG) d'autre part la valeur ys.

**18.** Circuit selon l'une des revendications 14 à 17, dans lequel il est prévu un quatrième réseau combinatoire (OF) qui combine p avec dxa pour déterminer s'il y a un débordement.

**19.** Circuit selon l'une des revendications 14 à 18, dans lequel le premier réseau combinatoire comporte un circuit pour former le complément à un (XSEQ) de xs et un deuxième additionneur (XADD) branché comme soustracteur et formant à partir du signal d'entrée (xe) , de la valeur de point de référence (xs, aei) et du numéro de type (t) la différence dx = xe - xs.

**20.** Circuit selon l'une des revendications 14 à 19, dans lequel il est prévu un cinquième réseau combinatoire (SEL) auquel sont envoyés le numéro de type (t), le signe (vdx) de dx et l'information de pente p et q et qui donne à partir de là le signe vdy de dy, la pente sa, la valeur de p et un signal (yei0) qui indique que la valeur de ye doit être = 0.

FIG 1

FIG 2

FIG 3

FIG 4

| t[2..0] | IMF-FORMEN | | VORZEI-CHENBITS vsl /vsr | KBM-WOERTER |
|---------|------------|---|--------------------------|-------------|
| 000 | | | -/0 | SW 1)<br>nimf[3..0]&$\overline{xs}$[11..0]<br><br>SW 2)<br>pr[3..0]&qr[11..0] |
| 001 | | | 1/- | SW 1)<br>nimf[3..0]&$\overline{xs}$[11..0]<br><br>SW 2)<br>pl[3..0]&ql[11..0] |
| 010 | | | -/0 | SW 1)<br>nimf[3..0]&ys[11..0]<br><br>SW 2)<br>pr[3..0]&qr[11..0] |
| 011 | | | 1/0 | SW 1)<br>nimf[3..0]&ys[11..0]<br><br>SW 2)<br>pl[3..0]&ql[11..0] |

FIG 5

EP 0 757 811 B1

EP 0 757 811 B1

| t [2..0] | IMF-FORMEN | VORZEI-CHENBITS vsl /vsr | KBM-WOERTER |
|---|---|---|---|
| 100 | pl,ql / pr,qr ... ys ... xs | 0/0 | SW 1)<br>nimf[3..0]&$\overline{xs}$[11..0] |
| 101 | pl,ql / pr,qr ... ys ... xs | 0/1 | SW 2)<br>pr[3..0]&qr[11..0]<br><br>SW 3)<br>pl[3..0]&ql[11..0] |
| 110 | pl,ql / pr,qr ... ys ... xs | 1/0 | SW 4)<br>ys[11..0] |
| 111 | pl,ql / pr,qr ... ys ... xs | 1/1 | |

FIG 6

FIG 7

FIG 8

EP 0 757 811 B1

SEL

12 qr
12 ql
4 pr
4 pl
3
1

yei0    vdx    vdy    p_en    yse_sel    dya_sel

vdy

12 sa

p    vdx

EN
PROD    24 sxa

SHIFT    rb

aei    4

12 xs
XSE0    12 xse    XADD    12 dx    ABX    12 dxa

cox
1
co

12 xe

'1'    ci

12 dya

MUX5    vdy

SEL
MUX6    dy 12

OF    12 yse

A 1

of
coy
ye_en

co    YADD    ci

12 ys
12 ye

12 yeo

EN    I
YREG
0    LD    12 yeld
R    LDEN

yeld_en
yel_res

EP 0 757 811 B1

F I G 9

# FIG 10

VON FUZZIFIER

vdx
yei0
of
vdy
coy
ciz
t[2..1]

2

STW

zf_clk
xs_clk
pqr_clk
pql_clk
ys_clk

c2u_en
c2uld_en

dya_sel
yse_sel
p_en
ye_en
yeld_en
ye_res

ZUM FUZZIFIER

EP 0 757 811 B1

# F I G 11

rdeia

rdzt

rdnxy

$\overline{t(2)} \cdot yei0 \cdot \overline{pa1} \cdot \overline{pa2} \cdot \overline{ciz}$

rdpq1

$\overline{ciz}$

wfa

$\overline{t(2)} \cdot yei0 \cdot (pa1 + pa2)$

$\overline{t(2)} \cdot \overline{yei0}$

$\overline{t(2)} \cdot yei0 \cdot \overline{pa1} \cdot \overline{pa2} \cdot \overline{ciz}$

$t(2) \cdot vdx$

rdpq2

$t(2) \cdot \overline{vdx}$

wfp0

rdy

wfp1

ciz

$\overline{ciz}$

$ciz \cdot (pa2 + \overline{oT})$

$ciz \cdot pa1 \cdot oT$

wfp2

rdkbd2

# F I G 12

dx(i) → [ =1 ]

vdx → [ =1 ]

c(i+1) ↑

[ HA ] → dxa(i)

c(i)

$1 \leq i \leq 10,$

$c(1) = vdx \cdot \overline{dx(0)};$

dx(11) → [ =1 ] → dxa(11)

$\overline{vdx}$ → [ ≥1 ]

c(11)

$c(1) = vdx \cdot \overline{dx(0)}$ und $dxa(0) = dx(0).$

dx(11) → [≥1] → [■1] → dxa(11)

c(11)

dx(10) → [AB2] → dxa(10)

$\overline{c(10)}$

dx(9) → [AB1] → dxa(9)

c(9)

c(3)

dx(2) → [AB2] → dxa(2)

$\overline{c(2)}$

dx(1) → [AB1] → dxa(1)

c(1)

dx(0) → [≥1] → dxa(0)

vdx → [1]

FIG 13

EP 0 757 811 B1

FIG 14

$1 \leq n \leq 5$

FIG 15

$1 \leq n \leq 5$

EP 0 757 811 B1

# FIG 16

37

FIG 17

| | |
|---|---|
| EAD | |
| EIA.1 | |
| EIA.2 | |
| EIA.3 | EIAD |
| EIA.4 | |
| EIA.2.1 | EIAD.2 |
| EIA.2.2 | |
| EIA.3.1 | EIAD.3 |
| EIA.3.2 | |
| EIA.2.2.1 | EIAD.2.2 |
| EIA.2.2.2 | |
| EIA.3.1.1 | |
| EIA.3.1.2 | EIAD.3.1 |
| EIA.3.1.3 | |
| EIA.3.1.4 | |

IMFD.1

IMFD.4

IMFD.2.1

IMFD.3.2

IMFD.2.2.1

IMFD.2.2.2

IMFD.3.1.1

IMFD.3.1.2

IMFD.3.1.3

IMFD.3.1.4

# F I G 18

EAD    adr(EAD)

EIAD

EIA.k    adr(EAD) + r(ael, xe)

EIA.k[15]=0       EIA.k[15]=1   adr(EIA.k) + EIA.k[12:0] + r(ael, ael.k, xe)

IMFD.k    EIA.k[14:0]

EIA.k.l

EIAD.k

EIA.k.l[15]=0       EIA.k.l[15]=1

IMFD.k.l    EIA.k.l[14:0]

EIA.k.l.m   ""

EIAD.k.l